# EUROPÄISCHE PATENTSCHRIFT

(11) **EP 3 057 394 B1**
(45) Veröffentlichungstag und Bekanntmachung des Hinweises auf die Patenterteilung: **15.04.2020**
(21) Anmeldenummer: 15794554.4
(22) Anmeldetag: 12.11.2015
(51) Int. Cl.: A01B 15/02, A01B 23/02

(54) **WERKZEUGKOMBINATION MIT EINEM LEITELEMENT**
TOOL COMBINATION COMPRISING A GUIDE ELEMENT
COMBINAISON D'OUTILS POURVU D'UN ÉLÉMENT DE GUIDAGE

(30) Priorität: 13.11.2014 DE 102014116619
(43) Veröffentlichungstag der Anmeldung: 24.08.2016
(73) Patentinhaber: Betek GmbH & Co. KG, 78733 Aichhalden (DE)
(72) Erfinder: KRÄMER, Ulrich, 77709 Wolfach (DE); SMEETS, Florian, 72270 Baiersbronn (DE); SEIFRIED, Fabian, 78662 Herrenzimmern (DE); ESSIG, Wolfgang, 72348 Rosenfeld (DE)
(74) Vertreter: Herrmann, Jochen
(86) Internationale Anmeldenummer: PCT/EP2015/076488
(87) Internationale Veröffentlichungsnummer: WO 2016/075266

(56) Entgegenhaltungen:
- WO-A1-2010/149464
- WO-A1-2014/026815
- DE-A1- 3 628 910
- DE-A1- 19 821 377
- DE-A1-102011 102 053
- FR-A1- 2 617 669
- US-A- 1 700 348

## Beschreibung

Die Erfindung betrifft eine Kombination mit einem Leitelement und einer Scharspitze für eine landwirtschaftliche Bodenbearbeitungsmaschine mit einem Anschlussbereich zur Zuordnung des Leitelements an der Scharspitze und mit einer ersten Schraubverbindung zur Befestigung des Leitelements an einem Träger, insbesondere einem Zinken der landwirtschaftlichen Bodenbearbeitungsmaschine.

Die Erfindung betrifft weiterhin eine Werkzeugkombination mit einem Leitelement und einer Scharspitze für eine landwirtschaftliche Bodenbearbeitungsmaschine mit einem Anschlussbereich des Leitelements zur Zuordnung des Leitelements an die Scharspitze und mit einer ersten Schraubverbindung zur Befestigung des Leitelements an einem Träger, insbesondere einem Zinken der landwirtschaftlichen Bodenbearbeitungsmaschine, wobei eine Dicke des Leitelements im Anschlussbereich innerhalb vorgegebener Toleranzen einer Dicke der Scharspitze an ihrem dem Leitelement zugewandten Ende entspricht.

Die Schrift DE 3628910 A1 offenbart eine Werkzeugkombination mit einer Scharspitze und einem Leitblech, die gemeinsam an einem Halm eines Zinkens einer Bodenbearbeitungsmaschine befestigt werden können. Die Scharspitze und das Leitblech sind durch eine Formschlussverbindung miteinander verbunden, so dass zur Befestigung an dem Halm nur jeweils eine Befestigungsschraube für das Leitblech und die Scharspitze erforderlich sind. Die Formschlussverbindung ist durch einen Nocken an der Scharspitze, welcher in einen angepassten Ausschnitt im Leitblech eingreift, gebildet. An seinem freien Ende ist das Leitblech um den Halm herumgebogen, um so am oberen freien Ende des Leitbleches den Erdstrom vom Halm sicher abzulenken und in die vorgesehene Richtung abzudrängen. Durch die Umbiegung wird eine formschlüssige Verbindung zwischen dem Leitblech und dem Halm erreicht, so dass das Leitblech mit der nur einen Befestigungsschraube am Halm festgelegt werden kann.

Nachteilig bei der offenbarten Werkzeugkombination ist, dass die Scharspitze, welche im Einsatz einer deutlich stärkeren Belastung ausgesetzt ist als das Leitblech, schneller verschleißt als das Leitblech und entsprechend früher gewechselt werden muss. Durch die offenliegende Formschlussverbindung können im Betrieb im Bereich zwischen dem Leitblech und der Scharspitze Verformungen eingebracht werden, welche ein Lösen der Scharspitze von dem Leitelement verhindern oder zumindest erschweren. Dies führt zu einem erhöhten Wartungsaufwand, wobei unter Umständen auch ein noch nicht verschlissenes Leitelement getauscht werden muss. Ein weiterer Nachteil ergibt sich daraus, dass das Leitelement in seinem Anschlussbereich an die Scharspitze stärker belastet wird als an seinem freien Ende. Ein Austausch des Leitelements wird daher durch seinen Verschleiß in dem Anschlussbereich bestimmt, während das freie Ende noch intakt ist. Gleiches gilt für die Scharspitze, die an ihrer vorderen Schneidkante deutlich schneller verschleißt als an ihrem dem Leitelement zugewandten Ende. Die gezeigte Werkzeugkombination führt demnach zu einem ungleichmäßigen Verschleißverhalten der verwendeten Komponenten untereinander sowie innerhalb der Komponenten. Dadurch bestimmen die am stärksten belasteten Komponenten bzw. Komponentenabschnitte die Standzeit der Werkzeugkombination und damit die Wartungsintervalle. Bei einem erforderlichen Austausch müssen eigentlich intakte Komponenten oder Komponentenabschnitte mit ersetzt werden.

Die DE 10 2011 102 053 A1 offenbart eine Werkzeugkombination mit einer Scharspitze, welche an einen Zinken eines Bodenbearbeitungsgeräts montiert werden kann. Die Scharspitze ist aus einem Tragteil gebildet, dessen Schneidende mit einem Schneidelement, bestehend aus Hartmetall, bestückt ist. Seitlich des Schneidelementes sind im Winkel Sekundärschneiden auf dem Tragteil aufgelötet. Im Anschluss an das Tragteil ist ein Leitblech vorgesehen, welches an seinem freien Ende den Zinken teilweise umschließt. Ein Leitteil ist vorgesehen, welches das Tragteil, abgesehen von den Schneidelementen und Sekundärschneiden, abdeckt. Das Leitteil ist formschlüssig an das Leitblech angeschlossen und lösbar mit dem Tragteil verbunden. Der mehrteilige Aufbau ermöglicht es, nur die Funktionsbauteile auszutauschen, die auch verschlissen sind. Dabei geht die Schrift davon aus, dass es äußerst unwahrscheinlich ist, dass alle Funktionsbauteile zum gleichen Zeitpunkt verschlissen sind und daher separat ausgetauscht werden müssen. Dies gilt auch für eine Erfindungsvariante, in der das Leitblech und das Leitteil als ein Bauteil ausgeführt sind. Hier sieht die Schrift ein symmetrisch aufgebautes und damit drehbares Leitblech vor, dass bei Verschleiß der dem Tragteil zugewandten Ende gedreht und damit weiter verwendet werden kann.

Auch hier ergibt sich der Nachteil, dass durch die offenliegende Formschlussverbindung im Bereich zwischen dem Leitblech und dem Tragteil oder dem Leitteil Verformungen eingebracht werden können, welche ein Trennen der Bauteile verhindern oder zumindest erschweren. Dies führt zu einem erhöhten Wartungsaufwand, wobei unter Umständen auch noch nicht verschlissene Bauteile mit getauscht werden müssen. Auf Grund der unterschiedlichen Standzeiten der verschiedenen Funktionsbauteile sind häufige Wartungen mit entsprechenden Stillstandzeiten der Bodenbearbeitungsmaschine erforderlich.

Es ist Aufgabe der Erfindung, eine Kombination mit einem Leitelement und einer Scharspitze der eingangs erwähnten Art bzw. eine Werkzeugkombination mit einem solchen Leitelement bereitzustellen, welches zu einem reduzierten Wartungsaufwand führt.

Die Aufgabe der Erfindung wird dadurch gelöst, dass das Leitelement zumindest bereichsweise entlang seiner von dem Anschlussbereich zu einem abgewandten Endbereich verlaufenden Längserstreckung eine variierende Dicke aufweist, und dass das Leitelement in dem der Scharspitze zugewandten Anschlussbereich seine größte Dicke aufweist. Die Dicke des Leitelements kann so in den verschiedenen Bereichen des Leitelements an die dort auftretende Belastung und damit an den dort auftretenden Verschleiß angepasst werden. Bereiche, die einer hohen Belastung ausgesetzt sind, werden dicker ausgeführt als Bereiche mit einer geringeren Belastung. Damit wird erreicht, dass das Leitelement in allen Bereichen eine vergleichbare Standzeit aufweist. Durch die Maßnahme können Wartungsintervalle gegenüber gleichbleibend dick ausgeführten Leitelementen verlängert werden oder es können vergleichbar lange Wartungsintervalle bei vermindertem Materialeinsatz erreicht werden. Weiterhin können die Wechselintervalle des Leitelements an die Wechselintervalle einer angeschlossenen Scharspitze angepasst werden, so dass insgesamt der erforderliche Wartungsaufwand deutlich reduziert werden kann. Ein verminderter Materialeinsatz führt vorteilhaft zu verringerten Herstellkosten sowie zu einer Gewichtsreduzierung des Leitelements. Insbesondere bei einer Vielzahl von an der Bodenbearbeitungsmaschine angebrachten Leitelementen führt die Gewichtsreduzierung zu einer Reduzierung der Gesamtbelastung der Bodenbearbeitungsmaschine sowie des Treibstoffverbrauchs eines Antriebsaggregates der Bodenbearbeitungsmaschine. Das Leitelement kann beispielsweise als Schmiedeteil gefertigt und damit sehr stabil und abriebfest ausgeführt sein.

Die mechanische Belastung des Leitelements ist im Anschluss an die Scharspitze am größten. Daher ist es vorgesehen, dass das Leitelement in dem der Scharspitze zugewandten Anschlussbereich seine größte Dicke aufweist.

Die mechanische Belastung und damit der Abrieb des Leitelements sind in seinem der Scharspitze abgewandten Endbereich am geringsten. Um eine vergleichbare Standzeit zwischen dem Anschlussberiech und dem Endbereich des Leitelements zu erreichen kann es daher vorgesehen sein, dass das Leitelement in dem der Scharspitze abgewandten Endbereich seine geringste Dicke aufweist.

Dabei kann eine vergleichbare Standzeit über die komplette Länge des Leitelements dadurch erreicht werden, dass die Dicke des Leitelements, beginnend von dem Anschlussbereich bis hin zu dem Endbereich, kontinuierlich abnimmt.

Entsprechend einer besonders bevorzugten Ausgestaltungsvariante der Erfindung kann es vorgesehen sein, dass die Dicke des Leitelements in seinem Anschlussbereich innerhalb vorgegebener Toleranzen der Dicke der dem Leitelement zugeordneten Scharspitze an ihrem dem Leitelement zugewandten Ende entspricht. Für das von der Scharspitze zu dem Leitelement gleitende Erdreich ergibt sich so ein kontinuierlicher Übergang ohne ausgebildete Stufen, an denen ein verstärkter Verschleiß auftritt. Weiterhin führt die gleiche Dicke des Leitelements und der Scharspitze in ihren aneinandergrenzenden Bereichen zu vergleichbaren Standzeiten der beiden Bauteile in diesen Bereichen. Sind die übrigen Bereiche der Scharspitze und des Leitelements durch entsprechende Dickenvariationen oder beispielsweise durch örtliche Belegungen mit Hartstoffelementen derart ausgelegt, dass sie eine zu den aneinandergrenzenden Bereichen vergleichbare Standzeit aufweisen, so zeigen die Scharspitze und das Leitelement untereinander sowie innerhalb der verschiedenen Bereiche der beiden Komponenten eine vergleichbare Standzeit und dadurch vergleichbare Wechselintervalle. Die Bauteile können so gleichzeitig gewechselt werden, was zu einem reduzierten Wartungsaufwand und zu verringerten Stillstandzeiten der Bodenbearbeitungsmaschine führt.

Das Leitelement ist mit einer ersten Schraubverbindung an dem Träger angebaut. Eine sichere und verschleißgeschützte erste Schraubverbindung kann dadurch erreicht werden, dass die erste Schraubverbindung im Anschlussbereich des Leitelements angeordnet ist und/oder dass ein erster Schraubenkopf einer ersten Befestigungsschraube der ersten Schraubverbindung in einer ersten Schraubaufnahme zurückgesetzt gegenüber einer Ableitfläche des Leitelements angeordnet ist. Die Befestigung des Leitelements erfolgt so im Bereich seiner größten Materialstärke, was zu einer belastbaren Verbindung zwischen dem Leitelement und dem Träger führt. Durch den zurückgesetzten Schraubenkopf ist dieser vor vorbeigleitendem Erdreich und damit vor abrasivem Verschleiß geschützt. Der Verschleißschutz wird zusätzlich dadurch verbessert, dass sich Erdreich in der Schraubaufnahme über dem Schraubenkopf festsetzt und damit den Schraubenkopf von dem vorbeigleitenden Erdreich abschirmt. Durch die vorliegende hohe Materialstärke kann die Schraubaufnahme entsprechend tief ausgeführt sein. Der Schraubenkopf ist somit auch nach erfolgtem starkem Abrieb des Leitelements gegenüber der resultierenden Ableitfläche des Leitelements zurückgesetzt und somit vor Verschleiß geschützt. Das Leitelement ist damit bis zu einem erforderlichen Austausch sicher an dem Träger gehalten.

Erfindungsgemäß kann es vorgesehen sein, dass das Leitelement mit seiner Rückseite an dem Träger anlegbar ausgebildet ist und/oder dass das Leitelement an seiner Rückseite zueinander beabstandet angeordnete, abstehende Stege aufweist und/oder dass zwischen den Stegen eine Führungsaufnahme für den Träger ausgebildet ist. Durch eine rückseitige Auflage des Leitelements an dem Träger wird eine hohe Stabilität gegenüber Verformung auch in Bereichen reduzierter Dicke des Leitelements erreicht, da auf das Leitelement entgegen einer Werkzeugvorschubrichtung einwirkende Kräfte auf den Träger übertragen werden. Die seitlichen Stege ermöglichen eine einfache Montage des Leitelements, da durch die Stege und die gebildete Führungsaufnahme das Leitelement einfach gegenüber dem Träger ausgerichtet werden kann. Ein weiterer Vorteil der Stege ergibt sich dadurch, dass von ihnen Querbelastungen des Leitblechs im Betrieb abgefangen werden. Das Leitelement ist somit quer zur Werkzeugvorschubrichtung formschlüssig an dem Träger festgelegt.

Die Stege können vorteilhaft im Anschlussbereich und/oder im Endbereich des Leitelements angeordnet sind. In diesen Bereichen bilden die Stege die bestmögliche seitliche Führung des Leitelements. Gegenüber längeren, beispielsweise von dem Anschlussbereich zu dem Endbereich durchgängigen Stegen ergibt sich der Vorteil der Materialoptimierung und damit verbunden eines geringeren Gewichts des Leitelements bei gleicher erreichbarer seitlicher Führung.

Auf das Leitelement einwirkende Querkräfte können dadurch besonders gut abgefangen werden, dass jeweils zwei Stege gegenüberliegend auf beiden Seiten des Trägers angeordnet sind und/oder dass die Stege an ihren zum Träger hin ausgerichteten Seiten Formschrägen derart aufweisen, dass sich ihr gegenseitiger Abstand mit steigendem Abstand zur Rückseite des Leitelements vergrößert. Die Formschrägen erleichtern die Montage des Leitelements an dem Träger, da sich das Leitelement selbstjustierend auf dem Träger ausrichtet. Durch die Formschrägen wird eine sich nach außen verbreiternde Führungsaufnahme erreicht, in die der Träger leicht eingeführt werden kann. Die sich verbreiternde Führungsaufnahme ermöglicht die Herstellung des Leitelements durch Schmieden.

Eine rückseitige Abstützung des Leitelements im Bereich der Stege kann dadurch erreicht werden, dass zwischen den Stegen eine Anlagefläche zur Anlage des Leitelements an dem Träger ausgebildet ist und/oder dass im Übergang von den Formschrägen zu der Anlagefläche Freimachungen in Form von Nuten vorgesehen sind. Die Freimachungen nehmen die Kanten des Trägers auf. Dadurch wird eine flächige Auflage der Anlagefläche des Leitelements an dem Träger erreicht, auch wenn dieser beispielsweise an den Kanten einen fertigungsbedingten Grat aufweist.

Entsprechend einer Ausführungsform der Erfindung kann es vorgesehen sein, dass die Stege auf ihren dem Leitelement abgewandten Seiten Stegaußenflächen aufweisen und dass die Übergänge von den Formschrägen zu den Stegaußenflächen abgerundet sind. Durch die abgerundeten Übergänge von den Formschrägen zu den Stegaußenflächen wird ein Verkanten des Leitelements gegenüber dem Träger bei der Montage vermieden. Das Leitelement kann durch die abgerundeten Übergänge und die nachfolgenden Formschrägen einfach und selbstjustierend auf dem Träger ausgerichtet werden. Zusätzlich führen die abgerundeten Übergänge zu einer spannungsoptimierten Konstruktion, bei der Spannungsspitzen, wie sie bei mechanischer Belastung im Bereich scharfer Kanten auftreten, vermieden werden.

Das Leitelement und eine zugeordnete Scharspitze können dadurch gegeneinander ausgerichtet sein, dass das Leitelement am Anschlussbereich einen Ansatz, insbesondere einen Steckansatz, zur Festlegung in einer Aufnahme der Scharspitze aufweist.

Entsprechend einer besonders bevorzugten Erfindungsvariante kann es dabei vorgesehen sein, dass die Form des Ansatzes des Leitelements derart ausgeführt ist, dass es nur mit einer in ihrer Form angepassten Aufnahme einer dem Leitelement eindeutig zugeordneten Scharspitze verbindbar ist. Dadurch erfolgt eine Kodierung in der Zuordnung eines Leitelements zu einer Scharspitze, durch die erreicht wird, dass mit einer bestimmten Ausführung einer Scharspitze nur ein zugehöriger Typ eines Leitelements verbunden werden kann. Durch diese Maßnahme können nur beispielsweise in ihrem Verschleißverhalten aufeinander abgestimmte Scharspitzen und Leitelemente miteinander verbunden werden. So können Scharspitzen-Typen mit unterschiedlicher Dicke vorgesehen sein, denen dann jeweils ein Typ Leitelemente mit angepasster Dicke im Anschlussbereich eindeutig zugeordnet ist.

Eine solche Kodierung zwischen dem Leitelement und der Scharspitze kann dadurch erfolgen, dass der Ansatz des Leitelements mit zumindest einem Vorsprung und/oder zumindest einer Ausnehmung zum Zusammenwirken mit einer Aufnahme und/oder einem angeformten Ansatz der Scharspitze ausgestattet ist.

Eine zusätzlich zu der ersten Schraubverbindung wirkende Festlegung des Leitelements kann dadurch erreicht werden, dass der Ansatz und die Aufnahme eine Formschlussverbindung ausbilden. Das Leitelement ist dadurch mit seinem Ansatz in der Aufnahme der Scharspitze formschlüssig gehalten.

Eine mögliche Erfindungsvariante zeichnet sich dadurch aus, dass das Leitelement 30 einteilig an die Scharspitze 40 angeformt ist. Hierdurch wird der Teile- und Montageaufwand reduziert. Darüber hinaus kann ein homogenisiertes Abfließen des Gutmaterials auf der Oberfläche erreicht werden.

Eine denkbare Ausführungsform der Erfindung kann dadurch gestaltet sein, dass die die Leitfläche bildende Vorderseite 32.1 des Leitelements 30 sich im Bereich zwischen dem der Scharspitze 40 zugewandten Ende zu dem der Scharspitze 40 abgewandten Ende wendelt. Hierdurch kann der Gutfluß zur Seite des Schars gelenkt werden. Durch diese kontinuierliche richtungsführende Ableitung kann insbesondere auch der Zugkraftbedarf verringert werden. Hierbei kann insbesondere auch nicht nur die Vorderseite, sondern insbesondere das gesamte Leitelement gedreht bzw. gewendelt sein. Dies verringert den Teileaufwand. Vorzugsweise sollte das Leitelement im Bereich zwischen 50° und 80° gewendelt sein. Eine optimale Ableitung wird im Bereich zwischen 15° und 70° erreicht.

Die die Werkzeugkombination betreffende Aufgabe der Erfindung wird dadurch gelöst, dass das Leitelement zumindest bereichsweise entlang seiner von dem Anschlussbereich zu einem abgewandten Endbereich verlaufenden Längserstreckung eine variierende Dicke aufweist. Durch die variierende Dicke kann die Beständigkeit der verschiedenen Bereiche des Leitelements an die dort im Werkzeugeinsatz jeweils vorliegenden Belastungen derart angepasst werden, dass über die gesamte Längserstreckung des Leitelements eine zumindest in etwa gleich lange Standzeit erreicht wird. Das Leitelement muss demnach nicht vorzeitig ausgetauscht werden, weil ein besonders stark belasteter Bereich vorzeitig verschlissen ist. Durch die örtlich an die Belastung angepasste Dicke des Leitelements kann seine Standzeit an die der angeschlossenen Scharspitze angepasst werden, so dass sich für das Leitelement und die Scharspitze vorteilhaft gleiche Wechselintervalle ergeben.

Eine Anpassung der Dicke des Leitelements an die im Werkzeugeinsatz tatsächlich vorliegende Belastung erfolgt dadurch, dass die Dicke des Leitelements ausgehend von dem Anschlussbereich hin zu einem dem Anschlussbereich gegenüberliegenden Endbereich des Leitelements abnimmt.

Entsprechend einer bevorzugten Ausführungsform der Erfindung kann es vorgesehen sein, dass die Scharspitze eine Aufnahme aufweist, die in Werkzeugvorschubrichtung (V) mittels eines Deckabschnitts überdeckt ist, dass das Leitelement einen Ansatz, insbesondere einen Steckansatz, aufweist, der in der Aufnahme gehalten ist und dass im Bereich der Aufnahme zwischen der Scharspitze und dem Leitelement eine von einer Aufnahme und dem darin eingreifenden Ansatz gebildete Verbindung, insbesondere eine Formschlussverbindung, wirksam ist. Durch die Formschlussverbindung ist das Leitelement an der Scharspitze festgelegt und gegenüber dieser ausgerichtet. Der Deckabschnitt verhindert dabei, dass der Bereich der Formschlussverbindung direkt dem vorbeigleitenden Erdreich ausgesetzt wird. Die Formschlussverbindung ist daher vor abrasivem Verschleiß geschützt. Weiterhin ist der Ansatz von dem Deckabschnitt gehalten, so dass er sich bei Belastung nicht aufbiegen kann. Dadurch wird eine deutlich längere Standzeit der Formschlussverbindung im Vergleich zu einer in Werkzeugvorschubrichtung offenen Formschlussverbindung erreicht. Durch den verringerten Verschleiß des Ansatzes und der Aufnahme können die Scharspitze und das Leitelement auch nach starker mechanischer Belastung einfach und sicher voneinander getrennt werden, wodurch der Wartungsaufwand beim Wechseln des Leitelements und/oder der Scharspitze gering gehalten wird.

Eine eindeutige Zuordnung einer Scharspitze zu einem in seinem Verschleiß an die Scharspitze angepassten Leitelement kann dadurch erfolgen, dass die Form des Ansatzes, insbesondere des Steckansatzes, in Abhängigkeit von der Dicke des Leitelements in seinem Anschlussbereich und die Form der Aufnahme der Scharspitze in Abhängigkeit von der Dicke der Scharspitze an ihrem dem Leitelement zugewandten Ende derart gewählt sind, dass der Ansatz, insbesondere der Steckansatz, und die Aufnahme nur bei gleicher Dicke des Leitelements in seinem Anschlussbereich und der Scharspitze an ihrem dem Leitelement zugewandten Ende verbindbar sind. Durch die Ausführung der Aufnahme und des Ansatzes passen nur Leitelemente und Scharspitzen mit gleicher Dicke in ihrem Übergangsbereich zueinander. Durch diese Kodierung kann sichergestellt werden, dass nur Leitelemente den jeweiligen Scharspitzen zugeordnet werden, bei denen die Standzeit entsprechend auf die Standzeit der Scharspitzen abgestimmt ist.

Bevorzugt kann es vorgesehen sein, dass das Leitelement entlang seiner Längserstreckung vorzugsweise in seinem Anschlussbereich oder an sonst beliebiger Stelle der Vorderseite 32.1 in eine Werkzeugvorschubrichtung (V) konkav geformt ist, dass die Scharspitze entlang ihrer Längserstreckung zumindest in einem dem Leitelement zugewandten Abschnitt in Werkzeugvorschubrichtung (V) konkav geformt ist und dass die Radien der konkav geformten Abschnitte zumindest im Anschlussbereich des Leitelements und in dem dem Leitelement zugewandten Abschnitt der Scharspitze innerhalb herstellungsbedingter Toleranzen gleich sind und/oder dass die konkaven Abschnitte ineinander übergeleitet sind. Dadurch wird eine gleichmäßige Überleitung des Erdreichs von der Scharspitze zu dem Leitelement erreicht, ohne dass sich Bereiche mit erhöhtem Widerstand und damit Abrieb ergeben.

Die Vorderseite 32.1 des Leitelementes kann im Rahmen der Erfindung unterschiedliche Gestaltungen aufweisen. So ist es möglich, dass die Vorderseite 32.1 zumindest bereichsweise konkav, konvex oder auch wellig gestaltet sein kann. Eine konkave Geometrie bildet ein Kanal in Leitelement-Längsrichtung zur gerichteten Führung des Guts. Bei konvexer Gestalt wird das Gut zu beiden Seiten des Schars abgeleitet. Damit entstehen in Längsrichtung des Leitelementes Kompressions- und Expansionszonen zu Gunsten eines verbesserten Verschleißverhaltens. Hier kann bereits eine Welle einen erheblichen Vorteil bieten. Anstelle einer konkaven oder konvexen Kontur können auch angestellte Oberflächengeometrien vorgesehen sein. Auch in Breitenrichtung kann eine variierende Baubreite des Leitelements vorgesehen sein, um gezielt die Förderwirkung zu beeinflussen.

Die Erfindung wird im Folgenden anhand eines in den Zeichnungen dargestellten Ausführungsbeispiels näher erläutert.

Es zeigen:
- Figur 1: in einer Frontansicht eine Grubberschar mit einer Scharspitze und einem Leitelement,
- Figur 2: in einer seitlichen Schnittdarstellung einen Ausschnitt der in Figur 1 gezeigten Grubberschar im Bereich der Scharspitze und des Leitelements,
- Figur 3: in einer quer zur Längserstreckung des Leitelements verlaufenden Schnittdarstellung das Leitelement mit einem Zinken in einem Endbereich des Leitelements in einer ersten Ausführungsform,
- Figur 4: in einer quer zur Längserstreckung des Leitelements verlaufenden Schnittdarstellung das Leitelement und den Zinken in einem Endbereich des Leitelements in einer zweiten Ausführungsform,
- Figur 5: in einer quer zur Längserstreckung des Leitelements verlaufenden Schnittdarstellung das Leitelement und den Zinken in einem Anschlussbereich des Leitelements in einer ersten Ausführungsform,
- Figur 6: in einer quer zur Längserstreckung des Leitelements verlaufenden Schnittdarstellung das Leitelement und den Zinken in einem Anschlussbereich des Leitelements in einer zweiten Ausführungsform,
- Figur 7: einen Ausschnitt der in Figur 2 gezeigten seitlichen Schnittdarstellung im Bereich einer Formschlussverbindung,
- Figur 8: den in Figur 7 gezeigten Ausschnitt der Formschlussverbindung in einer teilweise als Schnittdarstellung ausgeführten Rückansicht,
- Figur 9: den in Figur 7 gezeigten Ausschnitt in einer zweiten Ausführungsvariante der Formschlussverbindung,
- Figur 10: den in Figur 9 gezeigten Ausschnitt in einer teilweise als Schnittdarstellung ausgeführten Rückansicht und
- Figur 11: den in den Figuren 8 und 10 gezeigten Ausschnitt in einer dritten Ausführungsvariante der Formschlussverbindung.

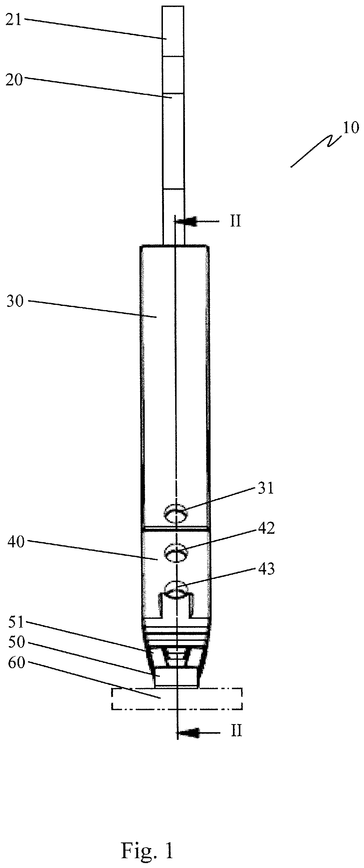

Figur 1 zeigt in einer Frontansicht eine Grubberschar 10 mit einer Scharspitze 40 und einem Leitelement 30. Die Grubberschar 10 kann an einen Werkzeugträger, insbesondere einen Zinken 20 bzw. Zinkenträger bzw. Grindel oder dergleichen einer landwirtschaftlichen Bodenbearbeitungsmaschine angebaut werden. Dazu weisen das Leitelement 30 eine erste Schraubaufnahme 31 und die Scharspitze 40 eine zweite Schraubaufnahme 42 und eine dritte Schraubaufnahme 43 auf. Der Zinken 20 weist ein Befestigungsteil 21 auf, das nicht dargestellt von Befestigungsbohrungen durchsetzt ist. Mittels dieser Befestigungsbohrungen kann der Zinken 20 an einem Geräteträger montiert werden. Dem zu bearbeitenden Boden 60 zugewandt endet die Scharspitze 30 in zwei vorderen Schneidelementen 50, denen seitlich zwei Hartstoffelemente 51 zugeordnet sind.

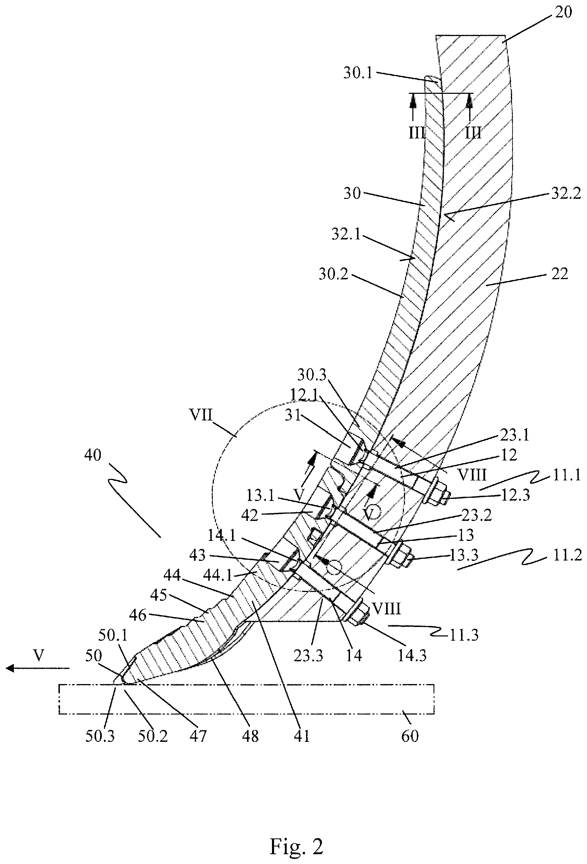

Figur 2 zeigt in einer seitlichen Schnittdarstellung einen Ausschnitt der in Figur 1 gezeigten Grubberschar 10 im Bereich der Scharspitze 40 und des Leitelements 30. Der Schnitt verläuft dabei entlang der in Figur 1 mit II bezeichneten Schnittlinie.

Der Zinken 20 weist in einem dem in Figur 1 gezeigten Befestigungsteil 21 abgewandten Bereich ein Tragteil 22 auf. An diesem Tragteil 22 sind die Scharspitze 40 und das Leitelement 30 angebaut.

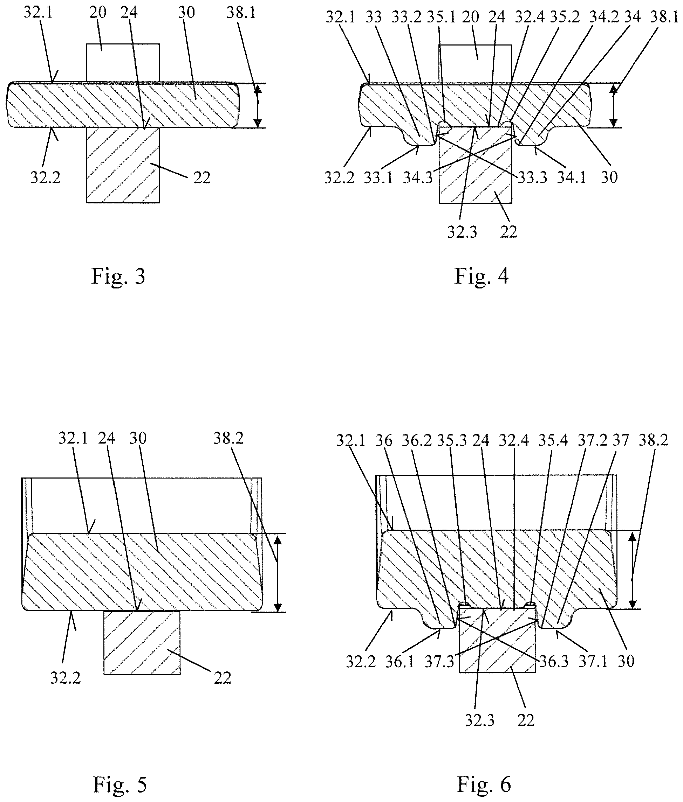

Das Leitelement 30 ist mit einer Ableitfläche 32.1 in eine Werkzeugvorschubrichtung V hin ausgerichtet. Mit einer Rückseite 32.2 liegt das Leitelement 30 an dem Tragteil 22 des Zinkens 20 an. Das Leitelement 30 ist, beginnend von einem der Scharspitze 40 zugewandten Anschlussbereich 30.3 über einen Mittenbereich 30.2 bis hin zu einem von der Scharspitze 40 abgewandten Endbereich 30.1 in Werkzeugvorschubrichtung V konkav gebogen. Dabei reduziert sich die in den Figuren 3 bis 6 durch Doppelpfeile markierte Dicke 38.1, 38.2 des Leitelements 30 von dem Anschlussbereich 30.3 bis zum Endbereich 30.1 kontinuierlich.

Zur Befestigung des Leitelements 30 und der Scharspitze 40 weist das Tragteil 22 des Zinkens 20 eine erste Bohrung 23.1, eine zweite Bohrung 23.2 und eine dritte Bohrung 23.3 auf. Die erste Bohrung 23.1 ist fluchtend zu der in dem Leitelement 30 angebrachten ersten Schraubaufnahme 31 angeordnet. Oberhalb der Scharspitze 40 ist das Leitelement 30 mit einer ersten Befestigungsschraube 12, welche durch die erste Schraubaufnahme 31 des Leitelements 30 und die erste Bohrung 23.1 in dem Zinken 20 geführt ist, und einer zugehörigen ersten Schraubenmutter 12.3 mit dem Tragteil 22 verbaut. Ein erster Schraubenkopf 12.1 der oberen Befestigungsschraube 12 ist als Senkkopf ausgeführt und fügt sich in die als gesenkte Bohrung ausgeführte erste Schraubaufnahme 31 derart ein, dass die Oberfläche des oberen Schraubenkopfes 12.1 zurückgesetzt zu der Ableitfläche 32.1 des Leitelements 30 liegt. Der obere Schraubenkopf 12.1 ist somit vor abrasivem Verschleiß durch vorbeigleitendes Erdreich geschützt.

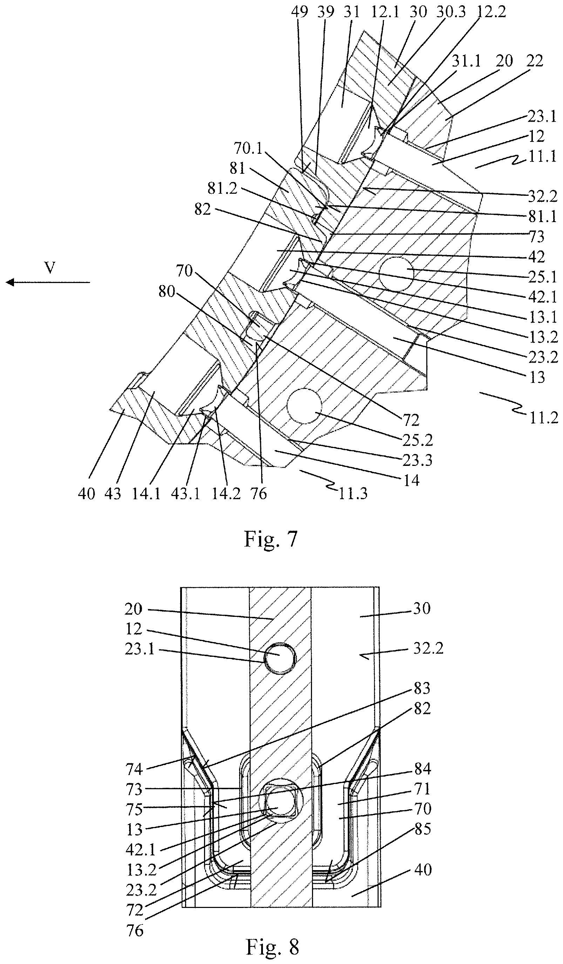

Die Scharspitze 40 ist im Anschluss an den Anschlussbereich 30.3 des Leitelements 30 angeordnet und mit diesem über eine in den Figuren 7 und 8 deutlicher gezeigte Formschlussverbindung verbunden.

Die Scharspitze 40 besitzt ein Basisteil 41, das von der zweiten und der dritten Schraubaufnahme 42, 43 durchdrungen ist. Unterhalb der dritten Schraubaufnahme 43 ist ein Deflektor 44.1 in Form eines Vorsprungs vorgesehen, der in Form eines Deflektors über eine frontseitige Ableitfläche 44 des Basisteils 41 vorsteht. Auf diese Weise bildet der Deflektor 44.1 eine Schürze, die einen in der dritten Schraubaufnahme 33 angeordneten dritten Schraubenkopf 14.1 einer dritten Befestigungsschraube 14 vor dem abrasiven Angriff vorbeigleitenden Erdreiches schützt. In Werkzeugvorschubrichtung V vor dem Deflektor 44.1 weist das Basisteil 41 Stufen 45 auf, die über die Ableitfläche 44 vorstehen. Im vorliegenden Ausführungsbeispiel sind die Ansätze 35 rippenförmig ausgebildet und quer zur Werkzeugvorschubrichtung V orientiert. Zwischen den einzelnen Stufen 45 sind Vertiefungen 46 gebildet. Während des Werkzeugeinsatzes kann sich Erdreich in den Bereich der Vertiefungen 46 hinein komprimieren und festsetzen. Hierdurch wird eine Art natürlicher Verschleißschutz auf der frontseitigen Ableitfläche 44 gebildet.

In Werkzeugvorschubrichtung V vor den Stufen 45 sind an einem Schneidenträger 47 die vorderen Schneidelemente 50 in Form von Hartmetallelementen befestigt, welche als vordere Kante der Scharspitze 40 eine Schneide 50.3 ausbilden. Die Schneidelemente 50 weisen einen flächenförmigen Befestigungsabschnitt 50.1 und ein daran angeformtes, entgegen der Werkzeugvorschubrichtung V abstehendes Ansatzstück 50.2 auf. Im Bereich des Ansatzstückes 50.2 wird die Schneide 50.3 gebildet. Die Schneidelemente 50 sind an dem Schneidenträger 47 derart befestigt, dass die freie Endkante des Schneidenträgers 47 von den Ansatzstücken 50.2 der Schneidelemente 50 zumindest teilweise umgriffen wird. Auf diese Weise wird das freie Ende des Schneidenträgers 47 verschleißgeschützt.

In Werkzeugvorschubrichtung V hinter den Schneidelementen 50 sind auf den besonders stark verschleißbelasteten Kantenbereichen des Basisteils 41 die in Figur 1 gezeigten Hartstoffelemente 51 aufgebracht. Vorliegend sind als Hartstoffelemente 51 Hartmetallplatten mit dem Basisteil 41 verlötet. Denkbar ist es jedoch auch, dass eine Panzerschweißung oder dergleichen Verwendung findet. Den Hartstoffelementen 51 gegenüberliegend ist das Basisteil 41 durch entlang seiner Kanten verlaufende Vorsprünge 48 verstärkt.

Die zweite Schraubaufnahme 42 und die dritte Schraubaufnahme 43 der Scharspitze 40 sind fluchten zu der zweiten Bohrung 23.2 und der dritten Bohrung 23.3 ausgerichtet. Durch die zweite Schraubaufnahme 42 und die zweite Bohrung 23.2 ist eine zweite Befestigungsschraube 13 geführt und mit einer zweiten Schraubenmutter 13.3 gehalten. Ein zweiter Schraubenkopf 13.1 ist versenkt und damit vor abrasivem Verschleiß geschützt in der zweiten Schraubaufnahme 42 festgehalten. Durch die dritte Schraubaufnahme 43 und die dritte Bohrung 23 ist die dritte Befestigungsschraube 14 geführt und mit einer dritten Schraubenmutter 14.3 gehalten. Somit ist das Leitelement 30 durch eine erste Schraubverbindung 11.1 und die Scharspitze 40 durch eine zweite und eine dritte Schraubverbindung 11.2, 11.3 mit dem Tragteil 22 des Zinkens 20 verbaut.

Die Grubberschar 10 wird von der landwirtschaftlichen Bodenbearbeitungsmaschine entsprechend der gezeigten Werkzeugvorschubrichtung V durch den zu bearbeitenden Boden 60 gezogen. Dabei wird das Erdreich von den Schneidelementen 50 abgetragen und über die frontseitige Ableitfläche 44 der Scharspitze 40 und die anschließende Ableitfläche 32.1 des Leitelements 30 weggeleitet. In dem gezeigten Ausführungsbeispiel ist das Leitelement 30 quer zur Werkzeugvorschubrichtung V geradlinig ausgeführt. Teilweise werden auch spiralförmige Ableitflächen eingesetzt. Die Scharspitze 40 und das Leitelement 30 sind entlang ihrer Längsausdehnung in Werkzeugvorschubrichtung V konkav geformt. Dabei entspricht der Radius der frontseitigen Ableitfläche 44 der Scharspitze 40 im Übergangsbereich zu dem Leitelement 30 dem Radius der Ableitfläche 32.1 im Anschlussbereich 30.3 des Leitelements 30. Abgetragenes Erdreich kann so in einer Fließbewegung von der Scharspitze 40 über das Leitelement 30 weggeleitet werden.

Erfindungsgemäß variiert die Dicke 38.1, 38.2 des Leitelements 30 über dessen Längserstreckung. Im Anschlussbereich 30.3 zeigt es die größte Dicke 38.2, welche an die Dicke der anschließenden Scharspitze 40 in deren dem Leitelement 30 zugewandten Bereich angepasst ist. Es ergibt sich somit ein stufenloser Übergang von der frontseitigen Ableitfläche 44 der Scharspitze 40 zu der Ableitfläche 32.1 des Leitelements 30. Das Erdreich kann dadurch gleichförmig von der Scharspitze 40 zu dem Leitelement 30 gleiten. Offene Kanten, an denen sich das vorbeigleitende Erdreich verfängt, sind vermieden, was zu einer deutlichen Reduzierung des Abriebs und somit des Verschleißes in diesem Bereich führt.

Die mechanische Belastung der Grubberschar 10 nimmt, beginnend von den Schneidelementen 50 bis hin zu dem Endbereich 30.1 des Leitelements 30, ab. Durch die aus einem Hartstoff gebildeten Schneidelemente 50 und die anschließenden Hartstoffelemente 51 ist der am stärksten belastete Bereich der Gubberschar 10 geschützt. Der daran anschließende Bereich der Scharspitze 40 ist besonders dick ausgeführt und zusätzlich über die Stufen 45 und Vertiefungen 46 vor Abrieb geschützt. Der Deflektor 44.1 bildet einen Schutz des nachfolgenden Befestigungsbereichs der Scharspitze 40, in dem er das vorbeigleitende Erdreich ablenkt. Die Scharspitze 40 ist demnach entsprechend der entlang ihrer Längserstreckung auftretenden unterschiedlichen Belastungen derart ausgelegt, dass im Betrieb eine vergleichbare Standzeit der verschiedenen Bereiche der Scharspitze 40 erreicht wird.

Das Leitelement 30 wird in dem an die Scharspitze 40 angrenzenden Anschlussbereich 30.3 am stärksten belastet, während die Belastung über den Mittenbereich 30.2 zum Endbereich 30.1 hin abnimmt. Entsprechend ist das Leitelement 30 derart ausgeführt, dass es in dem Anschlussbereich 30.3 seine größte Dicke 38.2 aufweist. Die Dicke 38.1, 38.2 des Leitelements 30 reduziert sich entsprechend der mechanischen Belastung beim Werkzeugeinsatz über den Mittenbereich 30.2 bis zu seiner geringsten Dicke 38.1 im Endbereich 30.1. Im Betrieb der Grubberschar 10 wird so eine gleichmäßige Standzeit der verschiedenen Bereiche des Leitelements 30 erreicht. Durch die gleiche Dicke 38.1, 38.2 des Leitelements 30 und der Scharspitze 40 in ihrem Übergangsbereich ist erreicht, dass auch die Standzeiten des Leitelements 30 und der Scharspitze 40 zumindest in etwa gleich sind. Dadurch ergibt es sich, dass das Leitelement 30 und die Scharspitze 40 gleichzeitig gewechselt werden können, was zu einer deutlichen Reduzierung der Wartungsarbeiten und damit der Stillstandzeiten der Bodenbearbeitungsmaschine führt.

Bei bekannten Leitelementen 30, bei denen die örtliche Materialstärke nicht an die jeweils vorliegende Belastung angepasst ist, wird die Materialstärke so gewählt, dass die Standzeit in dem am stärksten belasteten Bereich den Erwartungswerten entspricht. In weniger stark belasteten Bereichen liegt somit eine unnötig große Materialstärke vor. Dies kann durch die erfindungsgemäß entsprechend der erwarteten Belastung angepasste Dicke vermieden werden. Der Materialeinsatz kann so gegenüber bekannten Leitelementen 30 bei gleicher oder sogar verlängerter Standzeit des Leitelements 30 verringert werden. Damit können die Herstellkosten reduziert werden. Weiterhin wird das Gewicht der Grubberschar 10 reduziert, was insbesondere bei einer Vielzahl von an der Bodenbearbeitungsmaschine angebrachten Grubberscharen 10 zu einer Reduzierung der Belastung der Bodenbearbeitungsmaschine sowie des Treibstoffverbrauchs führt.

Das Leitelement 30 ist mittels der ersten Schraubverbindung 11.1 im Anschlussbereich 30.3 und somit im Bereich der größten Dicke 38.2 des Leitelements 30 befestigt. Die große Materialstärke in diesem Bereich ermöglicht eine besonders stabile Verbindung zwischen dem Leitelement 30 und dem Zinken 20. Die erste Schraubaufnahme 31 kann entsprechend tief ausgeführt sein, so dass der erste Schraubenkopf 12.1 der ersten Befestigungsschraube 12 weit gegenüber der Ableitfläche 32.1 des Leitelements 30 zurückgesetzt angeordnet ist. In dem über dem ersten Schraubenkopf 12.1 liegenden Hohlraum der ersten Schraubaufnahme 31 kann sich Erdreich absetzen und so den Schraubenkopf 12.1 im Betrieb zusätzlich vor dem vorbeigleitenden Erdreich schützen. Der erste Schraubenkopf 12.1 ist somit bestmöglich vor Verschleiß geschützt.

Figur 3 zeigt in einer quer zur Längserstreckung des Leitelements 30 verlaufenden Schnittdarstellung das Leitelement 30 mit einem Zinken 20 in einem Endbereich 30.1 des Leitelements 30 in einer ersten Ausführungsform. Der Schnitt verläuft dabei entlang der in Figur 2 mit III gekennzeichneten Schnittlinie.

Das Leitelement 30 liegt mit seiner als ebene Fläche ausgeführten Rückseite 32.2 an einer Vorderseite 24 des Tragteils 22 des Zinkens 20 an. Eine Flächennormale der Ableitfläche 32.1 weist in etwa in die Werkzeugvorschubrichtung V der Grubberschar 10. Durch das abgetragene Erdreich wird das Leitelement 30 gegen die Vorderseite 24 des Tragteils 22 gedrückt, so dass die auftretenden Kräfte durch den Zinken 20 abgefangen werden.

Das Leitelement 30 weist in dem dargestellten, mechanisch am wenigsten belasteten Endbereich 30.1 seine geringste Dicke 38.1 auf.

Figur 4 zeigt in einer quer zur Längserstreckung des Leitelements 30 verlaufenden Schnittdarstellung das Leitelement 30 und den Zinken 20 in einem Endbereich 30.1 des Leitelements 30 in einer zweiten Ausführungsform. Der Schnitt verläuft entlang der gleichen Schnittlinie wie der zur Figur 3.

Abweichend zu der in Figur 3 gezeigten Ausführungsvariante sind ein erster Steg 33 und ein zweiter Steg 34 an der Rückseite 32.2 des Leitelements 30 seitlich zu dem Tragteil 22 des Zinkens 20 angeformt. Dadurch ist zwischen den Stegen 33, 34 eine Führungsaufnahme 32.4 für das Tragteil 22 ausgebildet. Die Stege 33, 34 erheben sich über die Rückseite 32.2 des Leitelements 30 und bilden jeweils eine Stegaußenfläche 33.1, 34.1 aus. Die Stegaußenflächen 33.1, 34.1 gehen über Radienübergänge 33.2, 34.2 abgerundet in Formschrägen 33.3, 34.3 über. Die Formschrägen 33.3, 34.3 sind über als Nuten ausgeführte Freimachungen 35.1, 35.2 in eine Anlagefläche 32.3, welche in der gleichen Ebene wie die Rückseite 32.2 des Leitelements 30 liegt, übergeleitet. Das Leitelement 30 liegt mit der Anlagefläche 32.3 an der Vorderseite 24 des Tragteils 22 des Zinkens 20 an. Die Formschrägen 33.3, 34.3 sind derart ausgerichtet, dass sich ihr Abstand, beginnend von ihrem Übergang zu der Anlagefläche 32.3, nach außen hin vergrößert.

In Richtung der Längserstreckung des Leitelements 30 sind die Stege 33, 34 auf den Endbereich 30.1 des Leitelements 30 begrenzt.

Durch die Stege 33, 34 ist das Leitelement 30 in der Führungsaufnahme 32.4 seitlich an dem Tragteil 22 des Zinkens 20 geführt. Dies ermöglicht eine exakte und schnelle Ausrichtung des Leitelements 30 gegenüber dem Zinken 20 bei der Montage. Beim Anziehen der ersten Schraubverbindung 11.1 während der Montage ist das Leitelement 30 durch die Stege gegen Verdrehen gesichert. Entsprechendes gilt beim Lösen des Leitelements 30, wodurch die Montage und Demontage des Leitelements 30 deutlich vereinfacht wird. Im Betrieb werden auf das Leitelement 30 übertragene Querkräfte von den Stegen 33, 34 auf das Tragteil 22 des Zinkens 20 übertragen und damit abgefangen. Verformungen des Leitteils 30 insbesondere in seinem in der Dicke 38.1, 38.2 reduzierten Endbereich 30.1 können so vermieden werden. Die Anbringung der Stege 33, 34 im Endbereich 30.1 des Leitelements 30 führt zu einem maximal möglichen Hebel gegenüber der ersten Schraubverbindung 11.1. Dadurch können durch Querkräfte auf das Leitelement 30 übertragene Drehmomente mit geringstmöglicher Kraft und somit Belastung der Stege 33, 34 abgefangen werden.

Durch die Formschrägen 33.3, 34.3 der Stege 33, 34 wird erreicht, dass das Leitelement 30 bei der Montage einfach und selbstjustierend auf dem Tragteil 22 des Zinkens 20 positioniert werden kann. Weiterhin reduzieren die Formschrägen 33.3, 34.3 gegenüber planparallelen Anlageflächen die Gefahr, das sich Erdreich zwischen dem Tragteil 22 und den Stegen 33, 34 verklemmt und die Demontage des Leitelements 30 erschwert. Die Freimachungen 35.1, 35.2 nehmen die Kanten des Tragteils 22 auf. Dadurch wird gewährleistet, dass auch bei vorliegenden Fertigungstoleranzen oder bei einem herstellungsbedingt vorliegenden Grat an den Kanten des Tragteils 22 das Leitelement 30 mit seiner Anlagefläche 32.3 vollflächig an der Vorderseite 24 des Tragteils 22 anliegt.

Figur 5 zeigt in einer quer zur Längserstreckung des Leitelements 30 verlaufenden Schnittdarstellung das Leitelement 30 und den Zinken 20 in einem Anschlussbereich 30.3 des Leitelements 30 in einer ersten Ausführungsform. Der Schnitt verläuft entlang der in Figur 2 mit V gekennzeichneten Schnittlinie.

Das Leitelement 30 liegt demnach auch in seinem der Scharspitze 40 zugewandten Anschlussbereich 30.3 mit seiner Rückseite 32.3 an der Vorderseite 24 des Tragteils 22 des Zinkens 20 an. In dem dargestellten Ausführungsbeispiel ist die Rückseite 32.3 quer zur Längserstreckung des Leitelements 30 eben ausgeführt. Das in seinem Anschlussbereich entsprechend Figur 5 ausgeführte Leitelement 30 kann in seinem gegenüberliegenden Endbereich 30.1 entsprechend Figur 3 eben oder entsprechend der in Figur 4 gezeigten Ausführungsform mit Stegen 33, 34 ausgeführt sein.

Im Vergleich zu der in den Figuren 3 und 4 gezeigten geringsten Dicke 38.1 im Endbereich 30.1 des Leitelements 30 ist im Anschlussbereich 30.3 die größte Dicke 38.2 des Leitelements 30 vorgesehen, wie dies durch die unterschiedlich langen Doppelpfeile gezeigt ist. Damit liegt im Bereich der größten mechanischen Belastung und damit des größten Abriebs des Leitelements 30 die größte Dicke 38.2 vor, während im Bereich der geringsten mechanischen Belastung und des geringsten Abriebs die geringste Dicke 38.1 vorgesehen ist.

Figur 6 zeigt in einer quer zur Längserstreckung des Leitelements 30 verlaufenden Schnittdarstellung das Leitelement 30 und den Zinken 20 in dem Anschlussbereich 30.3 des Leitelements 30 in einer zweiten Ausführungsform. Der Schnittverlauf entspricht dem in Figur 5.

Wie bereits zu Figur 4 für den Endbereich 30.1 des Leitelements 30 beschrieben, sind in der in Figur 6 gezeigten Ausführungsform im Anschlussbereich 30.3 des Leitelements 30 seitlich zum Träger 22 des Zinkens 20 angeordnete Stege 36, 37 vorgesehen. Zwischen den Stegen 36, 37 ist die Führungsaufnahme 32.4 für das Tragteil 22 ausgebildet Die Stege 36, 37 weisen Stegaußenflächen 36.1, 37.1 auf, die über Rundungsübergänge 36.2, 37.2 in schräg zulaufende Formschrägen 36.3, 37.3 übergehen. Die Formschrägen 36.3, 37.3 sind über Freimachungen 35.3, 35.4 in die in einer Ebene zur Rückseite 32.2 des Leitelements 30 verlaufenden Anlagefläche 32.3 übergeleitet.

Die Funktion der Stege 36, 37 mit ihren Radienübergängen 36.2, 37.2, Formschrägen 36.3, 37.3 und Freimachungen 35.3, 35.4 entspricht der zu Figur 4 für den Endbereich 30.1 beschriebenen Funktion. Auch hier erfolgt eine seitliche Führung des Leitelements 30 in der Führungsaufnahme 32.4 an dem Tragteil 22 des Zinkens 20 mit den beschriebenen Vorteilen. Das in seinem Anschlussbereich entsprechend Figur 6 ausgeführte Leitelement 30 kann in seinem gegenüberliegenden Endbereich 30.1 entsprechend Figur 3 eben oder entsprechend der in Figur 4 gezeigten Ausführungsform mit Stegen 33, 34 ausgeführt sein. Ist das Leitelement 30 sowohl in seinem Endbereich 30.1 entsprechend Figur 4 und in seinem Anschlussbereich 30.3 entsprechend Figur 6 mit Stegen 33, 34, 36, 37 ausgeführt, können hohe auf das Leitelement 30 einwirkende Querkräfte abgefangen werden. Durch die Stege 36, 37 im Anschlussbereich wird die Montage des Leitelements 30 auf dem Tragteil 22 des Zinkens 20 deutlich vereinfacht, da sich das Leitelement 30 durch die Stege 36, 37 seitlich gegenüber dem Tragteil 22 ausrichtet, so dass die erste Schraubaufnahme 31 zu der ersten Bohrung 23.1 fluchtet.

Wie bereits zu Figur 5 beschrieben, ist in dem Anschlussbereich 30.3 die größte, durch einen Doppelpfeil angezeigte Dicke 38.2 des Leitelements 30 vorgesehen, welche sich über den Mittenbereich 30.2 bis hin zum Endbereich 30.1 des Leitelements 30 kontinuierlich verringert.

Figur 7 zeigt einen Ausschnitt der in Figur 2 gezeigten seitlichen Schnittdarstellung im Bereich einer Formschlussverbindung. Der gezeigte Ausschnitt ist in Figur 2 durch einen mit VII gekennzeichneten Kreis gezeigt. Gleiche Bauteile sind wie bereits zu Figur 1 und 2 eingeführt bezeichnet.

Das Leitelement 30 weist einen ersten Steckansatz 70 auf, der in Verlängerung des Leitelements 30 an dessen Anschlussbereich 30.3 angeformt ist. Der erste Steckansatz 70 ist gegenüber dem Anschlussbereich 30.3 in seiner Dicke reduziert und derart angeordnet, dass er mit den anderen Bereichen des Leitelements 30 eine durchgängige Rückseite 32.2 ausbildet, mit der der erste Steckansatz 70 an dem Tragteil 22 des Zinkens 20 anliegt. Der erste Steckansatz 70 ist als Flächenelement mit einer Ausnehmung 73 ausgebildet. Zu seinem freien Ende hin ist der erste Steckansatz 70 durch eine Brücke 72 mit einer abgerundeten, zum Zinken 20 in Richtung zum Anschlussbereich 30.3 des Leitelements 30 hin abfallenden Vorderkante 76 abgeschlossen.

Die Scharspitze 40 weist zu ihrem dem Leitelement 30 zugewandten Ende eine in Werkzeugvorschubrichtung V von einem ersten Deckabschnitt 81 überdeckte erste Aufnahme 80 auf. Der erste Steckansatz 70 ist in der ersten Aufnahme 80 durch eine Formschlussverbindung gehalten. Dazu ist an einer der Aufnahme 80 zugewandten Unterseite 81.1 des ersten Deckabschnittes 81 ein angeformter Ansatz 82 vorgesehen. Der angeformte Ansatz 82 ist derart ausgebildet, dass er formschlüssig in der Ausnehmung 73 des ersten Steckansatzes 70 eingepasst ist. Die zweite Befestigungsschraube 13 ist durch den angeformten Ansatz 82 geführt.

Der erste Deckabschnitt 81 liegt mit seiner Unterseite 81.1 an einer Oberseite 70.1 des ersten Steckansatzes 70 an. Im Übergang von der Unterseite 81.1 zu dem angeformten Ansatz 82 ist eine Freistellungsnut 81.2 umlaufend zu dem angeformten Ansatz 82 vorgesehen, in welcher die umlaufend zur Ausnehmung 73 verlaufenden Kanten des ersten Steckansatzes 70 aufgenommen sind.

Ausgehend von dem ersten Steckansatz 73 weist das Leitelement 30 eine Vorderfläche 39 auf, die mit geringem Abstand gegenüber einer Abschlusskante 49 der Scharspitze 40 angeordnet ist.

An den Befestigungsschrauben 12, 13, 14 ist jeweils im Anschluss an ihren Schraubenkopf 12.1, 13.1, 14.1 ein Arretierungsansatz 12.2, 13.2, 14.2 angeformt. Die Arretierungsansätze 12.2, 13.2, 14.2 greifen in Schraubenarretierungen 31.1, 42.1, 43.1 ein, welche zum Tragteil 22 weisend an den jeweiligen Schraubaufnahmen 31, 42, 43 vorgesehen sind. Die Befestigungsschrauben 12, 13, 14 sind so gegen Verdrehen gesichert.

Das Tragteil 22 weist quer zur Werkzeugvorschubrichtung V verlaufende Bohrungen 25.1, 25.2 auf, an welchen optional nicht dargestellte Scharflügel angeschraubt werden können.

Zur Montage der Gubberschar 10 wird das Leitelement 30 derart an dem Zinken ausgerichtet, dass seine erste Schraubaufnahme 31 mit der ersten Bohrung 23.1 im Tragteil 22 des Zinkens 20 fluchtet. Anschließend wird die erste Befestigungsschraube 12 durch die erste Schraubaufnahme 31 und die erste Bohrung 23.1 geführt und rückseitig am Zinken 20 mit der in Figur 2 gezeigten ersten Schraubenmutter 12.3 verschraubt. Dabei ist die erste Befestigungsschraube 12 durch den ersten Arretierungsansatz 12.2 in der ersten Schraubenarretierung 31.1 gegen Verdrehen gesichert, so dass zum Festschrauben auf Seiten des ersten Schraubenkopfes 12.1 kein Werkzeug benötigt wird. Das Leitelement 30 ist somit durch die ausgebildete erste Schraubverbindung 11.1 an dem Tragteil 22 des Zinkens 20 festgelegt.

In einem zweiten Montageschritt wird die Scharspitze 40 so an das Tragteil 22 des Zinkens 20 angelegt, dass der angeformte Ansatz 82 der ersten Aufnahme 80 in die Ausnehmung 73 des ersten Steckansatzes 70 des Leitelements 30 eingreift. Die Scharspitze 40 ist dadurch derart gegenüber dem Tragteil 22 ausgerichtet, dass die zweite Schraubaufnahme 42 der Scharspitze 40 mit der zweiten Bohrung 23.2 des Tragteils 22 und die dritte Schraubaufnahme 43 der Scharspitze 40 mit der dritten Bohrung 23.3 des Tragteils 22 fluchtet. Auch hier werden die zweite und dritte Befestigungsschraube 13, 14 eingeführt und rückseitig verschraubt. Die Befestigungsschrauben 13, 14 sind dabei durch ihre Arretierungsansätze 13.2, 14.2 in den jeweiligen Schraubenarretierungen 42.1, 43.1 der Schraubaufnahmen 42, 43 gegen Verdrehen gesichert, so dass die rückseitigen Schraubenmuttern 13.3, 14.3 angezogen werden können. Durch die so gebildete zweite und dritte Schraubverbindung 11.2, 11.3 ist die Scharspitze 40 an dem Tragteil 22 des Zinkens 20 verbaut.

Der angeformte Ansatz 82 der ersten Aufnahme 80 und die Ausnehmung 73 des ersten Steckansatzes 70 bilden eine Formschlussverbindung, welche zusätzlich zu den Schraubverbindungen 11.1, 11.2, 11.3 eine Bewegung des Leitelements 30 aus der ersten Aufnahme 80 blockiert. In Werkzeugvorschubrichtung V ist eine Bewegung des Leitelements 30 durch die Anlage des ersten Steckansatzes 70 mit seiner Oberseite 70.1 an der Unterseite 81.1 des ersten Deckabschnitts 81 blockiert. Das Leitelement 30 ist somit formschlüssig in der ersten Aufnahme 80 der Scharspitze 40 festgelegt. Dabei ist die Formschlussverbindung durch den ersten Deckabschnitt 81 gegen vorbeigleitendes Erdreich geschützt. Eine Beschädigung der Formschlussverbindung, beispielsweise durch eine Verformung des ersten Steckansatzes 70, kann so sicher vermieden werden. Die Scharspitze 40 und das Leitelement 30 können daher auch nach langer Betriebszeit mit hohem auftretendem Verschleiß einfach und schnell getrennt werden. Dazu trägt auch der klein gehaltene Abstand zwischen der Vorderfläche 39 des Leitelements 30 und der Abschlusskante 49 der Scharspitze 40 bei, durch den keine größere Menge an Erdreich in den Bereich der Formschlussverbindung gelangt. Durch die zweite Schraubverbindung 11.2 sind die Scharspitze 40 und das Leitelement 30 im Bereich der ersten Aufnahme 80 und des ersten Steckansatzes 70 fest zusammengedrückt und in dieser Position gehalten. Dadurch wird ein Aufbiegen des ersten Deckabschnitts 81 und des ersten Steckansatzes 70 vermieden. Auch dadurch ist sichergestellt, dass die Scharspitze 40 und das Leitelement 30 auch nach starker Beanspruchung einfach und sicher getrennt werden können.

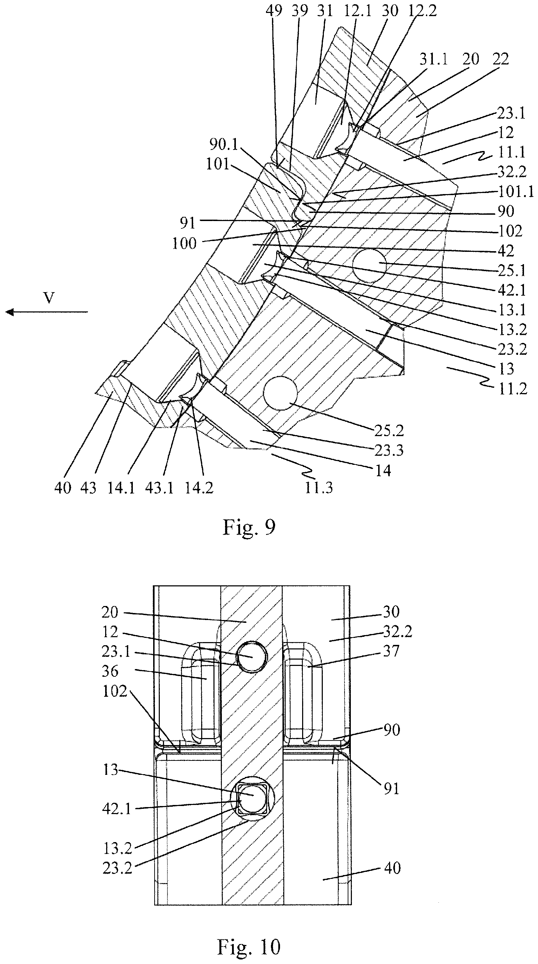

Die Formschlussverbindung ist derart ausgelegt, dass nur ein passend ausgeformter erster Steckansatz 70 in die erste Aufnahme 80 eingeführt und darin festgelegt werden kann. Dies ermöglicht eine Kodierung, in der nur aufeinander abgestimmte Leitelemente 30 und Scharspitzen 40 zusammengeführt werden können. So kann beispielsweise sichergestellt werden, dass nur Leitelemente 30 mit einer Scharspitze 40 verbaut werden, die in ihrem Anschlussbereich 30.3 eine an die Scharspitze 40 angepasste größte Dicke 38.2 aufweisen. Für vergleichbare Scharspitzen 40 mit einer anderen Dicke sind entsprechend andere Leitelemente 30 mit einer angepassten anderen größten Dicke 38.2 vorzusehen. Diese können dann, wie in den Figuren 9, 10 und 11 gezeigt, anders ausgeformte Steckansätze 90, 110 aufweisen, mit denen sie in entsprechende Aufnahmen 100, 120 der Scharspitzen 40 festgelegt werden können.

Figur 8 zeigt den in Figur 7 gezeigten Ausschnitt der Formschlussverbindung in einer teilweise als Schnittdarstellung ausgeführten Rückansicht. Dabei ist das Tragteil 22 des Zinkens 20 als Schnitt entsprechend einer in Figur 2 mit VIII gekennzeichneten Schnittlinie dargestellt. Der erste Steckansatz 70 ist in die erste Aufnahme 80 eingeführt und dort festgelegt.

Die erste Aufnahme 80 ist taschenförmig in die Rückseite der Scharspitze 40 eingeformt. Sie weist sich seitlich an den in Figur 7 gezeigten ersten Deckabschnitt 81 anschließende erste Einführschrägen 83 auf. Die ersten Einführschrägen 83 sind dabei zueinander V-förmig, beispielsweise in einem Öffnungswinkel von 60°, angestellt. Im Bereich unterhalb der ersten Einführschrägen 83 sind Blockierstücke 84 beabstandet angeordnet. Die beiden Blockierstücke 84 sind mittels eines Verbindungsstücks 85 der ersten Aufnahme 80 miteinander einteilig verbunden. Die ersten Einführungsschrägen 83, die Blockierstücke 84 und das Verbindungsstück 62.3 bilden Seitenwände der ersten Aufnahme 80, welche von dem ersten Deckabschnitt 81 aufsteigen. Stirnseitig zu dem Leitelement 30 hin ist die erste Aufnahme 80 durch eine Aufnahmeöffnung geöffnet. Entlang der ersten Einführschrägen 83, der Blockierstücke 84 und des Verbindungsstücks 85 kann eine Freistellnut in dem ersten Deckabschnitt 81 vorgesehen. Die Freistellnut bildet einen abgerundeten Übergang von dem ersten Deckabschnitt 81 zu den Seitenwänden, wodurch durch äußere Krafteinwirkungen eingebrachte Spannungsspitzen gegenüber einer scharfen Abkantung reduziert werden. Die Freistellnut dient ebenfalls der Aufnahme eines Grates, wie er gegebenenfalls fertigungsbedingt an dem ersten Steckansatz 70 des Leitelements 30, der in der Aufnahme 80 gehalten ist, an den Kanten vorliegen kann.

Der erste Steckansatz 70 ist als in etwa U-förmiger Bügel ausgebildet, der an den Anschlussbereich 30.3 des Leitelements 30 angeschlossen ist. Er verjüngt sich quer zur Werkzeugvorschubrichtung V durch zwei zueinander V-förmig im Winkel eingestellte erste Führungsflächen 74 hin zu zwei beabstandet gegenüberliegenden Seitenteilen 71, die am vorderen Ende des Leitelements 30 mit der Brücke 72 verbunden sind. Durch die Seitenteile 71, die Brücke 72 und den der Brücke 72 gegenüberliegenden Grundkörper des ersten Steckansatzes 70 ist die Ausnehmung 73 des Steckansatzes 70 umschlossen. Die ersten Führungsflächen 74 gehen in Anlageflächen 75 der beiden Seitenteile 71 über. Am Ende des ersten Steckansatzes 70 bildet der Bügel 72 eine Vorderkante 76 aus. Die ersten Führungsflächen 74, die Seitenteile 71 und die Vorderkante 76 bilden äußere Seitenwände des ersten Steckansatzes 70.

Im dargestellten montierten Zustand sind die ersten Führungsflächen 74 zu den ersten Einführungsschrägen 83, die Anlageflächen 75 zu den ersten Blockierstücken 84 und die Vorderkante 76 zu dem Verbindungsstück 85 in geringem Abstand zueinander angeordnet. Dadurch ist das Leitelement 30 seitlich geführt und verdrehsicher in der ersten Aufnahme 80 der Scharspitze 40 gehalten. Gleichzeitig greift der angeformte Ansatz 82 in die Ausnehmung 73 ein, wodurch eine formschlüssige Blockade zwischen dem ersten Steckansatz 70 und der ersten Aufnahme 80 gewährleistet wird. Diese verhindert, dass der erste Steckansatz 70 aus der ersten Aufnahme 80 gleitet.

Die ersten Einführungsschrägen 83 und die zugehörigen ersten Führungsflächen 74 erleichtern das Zusammenfügen der Scharspitze 40 und des Leitelements 30 bei der Montage.

Figur 9 zeigt den in Figur 7 gezeigten Ausschnitt in einer zweiten Ausführungsvariante der Formschlussverbindung. Gleiche Bauteile sind dabei wiederum gleich bezeichnet.

Der zweite Steckansatz 90 ist als kurzer, über die Breite des Leitelements 30 verlaufender und dem Tragteil 22 des Zinkens 20 zugewandter Ansatz ausgebildet. Mit der Rückseite 32.2 liegt der zweite Steckansatz 90 an dem Tragteil 22 an. Der zweite Steckansatz 90 ist in die zweite Aufnahme 100 der Scharspitze 40 eingeführt. Die zweite Aufnahme 100 ist in Werkzeugvorschubrichtung V durch einen zweiten Deckabschnitt 101 abgedeckt. Der zweite Steckansatz 90 liegt mit einer zweiten Oberseite 90.1 an einer zweiten Unterseite 101.1 des zweiten Deckabschnitts 101 an und ist durch diesen in Werkzeugvorschubrichtung V gehalten. Zu seinem freien Ende hin ist der zweite Steckansatz 90 durch eine abgerundeten, zum Zinken 20 in Richtung zum Anschlussbereich 30.3 des Leitelements 30 hin abfallenden zweite Vorderkante 91 abgeschlossen. Die zweite Vorderkante 91 ist beabstandet gegenüber einem zweiten Anlagebereich 102 der zweiten Aufnahme 100 gehalten.

In der gezeigten Ausführungsform ist der zweite Steckansatz 100 nicht durch einen in Richtung der Längserstreckung des Leitelements 30 wirkenden Formschluss mit der Scharspitze 40 verbunden. Das Leitelement 30 kann somit bei Bedarf getauscht werden, ohne dass zuvor die Scharspitze 40 demontiert werden muss. Die durch den zweiten Steckansatz 100 und den zweiten Deckabschnitt 101 gebildete, in Richtung der Werkzeugvorschubrichtung V wirkende Formschlussverbindung verhindert ein Abheben oder Verbiegen des Leitelements 30 in seinem Anschlussbereich 30 und an dem zweiten Steckansatz 100 selbst. Durch den geringen Abstand zwischen der Abschlusskante 49 der Scharspitze und der Vorderfläche 39 des Leitelements 30 ist verhindert, dass Erdreich in größeren Mengen in den Bereich der zweiten Aufnahme 100 gelangt und die Bauteile gegeneinander verklemmt. Die Scharspitze 40 und das Leitelement können so auch nach langer Betriebszeit mit entsprechend hohem Verschleiß einfach und sicher getrennt werden.

Im Vergleich zu der in den Figuren 7 und 8 gezeigten Formschlussverbindung sind die jeweiligen Aufnahmen 80, 100 und die zugehörigen Steckansätze 90, 110 derart unterschiedlich ausgeführt, dass der zweite Steckansatz 110 nicht in die erste Aufnahme 80 und der erste Steckansatz 90 nicht in die zweite Aufnahme 100 passt. Dadurch kann eine eindeutige Zuordnung einer bestimmten Ausführung einer Scharspitze 40 zu einer zugehörigen Ausführung eines Leitelements 30 erreicht werden. So können beispielsweise verschiedene Ausführungen von Scharspitzen 40 mit unterschiedlichen Materialstärken in ihrem dem Leitelement 30 zugewandten Bereich eindeutig zugehörigen Leitelementen 30 mit angepassten größten Dicken 38.2 in ihrem Anschlussbereich 30.3 zugeordnet werden. Leitelemente 30 mit einer abweichenden größten Dicke 38.2 können durch die Ausführung ihres Steckansatzes 70, 90 nicht fehlerhaft mit einer nicht zugehörigen Scharspitze 40 kombiniert werden. Dadurch ist sichergestellt, dass im Bereich des Übergangs zwischen der Scharspitze 40 und dem Leitelement 30 keine Kanten vorliegen, die einem verstärkten Verschleiß unterliegen. Weiterhin ist sichergestellt, dass die Scharspitze 40 und das Leitelement 30 vergleichbare Standzeiten aufweisen, so dass die Wartungsintervalle aufeinander abgestimmt sind.

Figur 10 zeigt den in Figur 9 gezeigten Ausschnitt in einer teilweise als Schnittdarstellung ausgeführten Rückansicht.

Der zweite Steckansatz 90 ist in die zweite Aufnahme 100 der Scharspitze 40 eingeführt. Durch den geringen Abstand der zweiten Vorderkante 91 des Leitelements 30 zu dem gegenüberliegenden zweiten Anlagebereich 102 der Scharspitze 40 wird vermieden, dass Erdreich in die zweite Aufnahme 100 gelangt. Der zweite Steckansatz 90 ist über die gesamte Breite des Leitelements 30 ausgeführt, so dass in Werkzeugvorschubrichtung V eine belastbare Formschlussverbindung gebildet ist. Quer zur Werkzeugvorschubrichtung V ist die Formschlussverbindung nicht wirksam. Ebenso blockiert die Formschlussverbindung nicht eine Bewegung des zweiten Steckansatzes 90 aus der zweiten Aufnahme in Richtung des Leitelements 30.

Wie zu Figur 6 gezeigt, sind seitlich zu dem Zinken 20 gegenüberliegende Stege 36, 37 angeordnet, welche das Leitelement 30 seitlich festlegen. In Kombination mit der durch den zweiten Steckansatz 90 und die zweite Aufnahme 100 gebildeten, in Werkzeugvorschubrichtung V wirkenden Formschlussverbindung ist das Leitelement somit in Werkzeugvorschubrichtung V sowie quer dazu formschlüssig gehalten. Die zweite Schraubverbindung 11.2 verhindert, dass der zweite Steckansatz 90 aus der zweiten Aufnahme gezogen werden kann. Zur einzelnen Demontage des Leitelements 30 muss lediglich die zweite Schraubverbindung 11.2 gelöst und das Leitelement 30 mit seinem zweiten Steckansatz 90 aus der zweiten Aufnahme 100 gezogen werden. Die Scharspitze 40 kann montiert bleiben.

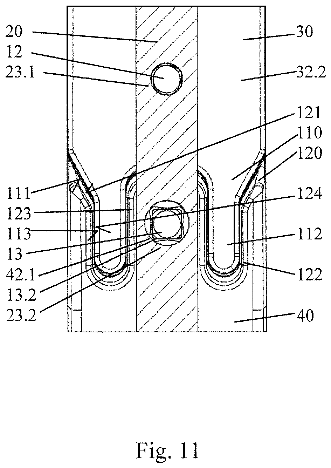

Figur 11 zeigt den in den Figuren 8 und 10 gezeigten Ausschnitt in einer dritten Ausführungsvariante der Formschlussverbindung.

Der dritte Steckansatz 110 ist durch zwei beabstandet und seitlich zu dem Zinken 20 angeordnete, U-förmige Ansätze 112 gebildet, welche in der entsprechend ausgeformten dritten Aufnahme 120 in zwei U-förmigen Ausnehmungen 122 gehalten sind. Der dritte Steckansatz 110 weist entsprechend dem ersten Steckansatz 70 zwei im Winkel V-förmig verlaufende Führungsflächen 111 auf, welche gegenüber von zwei korrespondierenden Einführungsschrägen 121 der dritten Aufnahme 120 angeordnet sind. Die Seitenwände der U-förmigen Ansätze 112 bilden Anlageflächen 113 auf, die gegenüber von Blockierabschnitten 124 der dritten Aufnahme 120 angeordnet sind. Zwischen den U-förmigen Ausnehmungen 122 ist ein Mittensteg ausgebildet, durch den die zweite Befestigungsschraube 13 der zweiten Schraubverbindung 11.2 geführt ist.

Im Vergleich zu der in den Figuren 9 und 10 gezeigten, durch den zweiten Steckansatz 90 und die zweite Aufnahme 100 gebildete Formschlussverbindung blockiert die in Figur 11 gezeigte Formschlussverbindung auch eine seitliche Bewegung des Leitelements 30 oder der Scharspitze 40. Daher kann auf seitlich des Zinkens 20 an der Rückseite 32.2 des Anschlussbereichs 30.3 des Leitelements 30 angebrachte Stege 36, 37 verzichtet werden. Im Vergleich zu der in den Figuren 7 und 8 gezeigten Formschlussverbindung, welche mit der quer verlaufenden Brücke 72 den angeformten Ansatz 82 umschließt und somit eine Bewegung des zweiten Steckansatzes 90 aus der zweiten Aufnahme 100 blockiert, wirkt die in Figur 11 gezeigte Formschlussverbindung nur in der Werkzeugvorschubrichtung V und quer zur Längserstreckung des Leitelements 30 und der Scharspitze 40. In Richtung der Längserstreckung des Leitelements 30 und der Scharspitze 40 sind das Leitelement 30 nur durch die erste Schraubverbindung 11.1 und die Scharspitze 40 durch die zweite und dritte Schraubverbindung 11.2, 11.3 gehalten. Entsprechend muss zur Montage und Demontage des Leitelements 30 die Scharspitze 40 nicht vom Zinken 20 gelöst werden. Der dritte Steckansatz 110 kann, nachdem die erste Befestigungsschraube 12 entfernt wurde, aus der dritten Aufnahme 120 gezogen bzw. in diese eingeschoben werden.

## Patentansprüche

1. Kombination mit einem Leitelement (30) und einer Scharspitze (40) für eine landwirtschaftliche Bodenbearbeitungsmaschine mit einem Anschlussbereich (30.3) zur Zuordnung des Leitelements (30) an der Scharspitze (40) und mit einer ersten Schraubverbindung (11.1) zur Befestigung des Leitelements (30) an einem Träger, insbesondere einem Zinken (20) der landwirtschaftlichen Bodenbearbeitungsmaschine,
**dadurch gekennzeichnet,**
**dass** das Leitelement (30) in dem der Scharspitze (40) zugewandten Anschlussbereich (30.3) seine größte Dicke (38.2) aufweist,
**dass** das Leitelement (30) zumindest bereichsweise entlang seiner von dem Anschlussbereich (30.3) zu einem abgewandten Endbereich (30.1) verlaufenden Längserstreckung eine variierende Dicke (38.1, 38.2) aufweist.

2. Kombination (30) nach Anspruch 1,
**dadurch gekennzeichnet,**
**dass** das Leitelement (30) in dem der Scharspitze (40) abgewandten Endbereich (30.1) seine geringste Dicke (38.1) aufweist.

3. Kombination (30) nach einem der Ansprüche 1 oder 2,
**dadurch gekennzeichnet,**
**dass** die Dicke (38.1, 38.2) des Leitelements (30), beginnend von dem Anschlussbereich (30.3) bis hin zu dem Endbereich (30.1), kontinuierlich abnimmt.

4. Kombination (30) nach einem der Ansprüche 1 bis 3,
**dadurch gekennzeichnet,**
**dass** die Dicke (38.1, 38.2) des Leitelements (30) in seinem Anschlussbereich (30.3) innerhalb vorgegebener Toleranzen der Dicke der dem Leitelement (30) zugeordneten Scharspitze (40) an ihrem dem Leitelement (30) zugewandten Ende entspricht.

5. Kombination (30) nach einem der Ansprüche 1 bis 4,
**dadurch gekennzeichnet,**
**dass** die erste Schraubverbindung (11.1) im Anschlussbereich (30.3) des Leitelements (30) angeordnet ist und/oder dass ein erster Schraubenkopf (12.1) einer ersten Befestigungsschraube (12) der ersten Schraubverbindung (11.1) in einer ersten Schraubaufnahme (31) zurückgesetzt gegenüber einer Ableitfläche (32.1) des Leitelements (30) angeordnet ist.

6. Kombination (30) nach einem der Ansprüche 1 bis 5,
**dadurch gekennzeichnet,**
**dass** das Leitelement (30) mit seiner Rückseite (32.2) an dem Träger anlegbar ausgebildet ist und/oder dass das Leitelement (30) an seiner Rückseite (32.2) zueinander beabstandet angeordnete, abstehende Stege (33, 34, 36, 37) aufweist und/oder dass zwischen den Stegen (33, 34, 36, 37) eine Führungsaufnahme für den Träger ausgebildet ist.

7. Kombination (30) nach Anspruch 6,
**dadurch gekennzeichnet,**
**dass** die Stege (33, 34, 36, 37) im Anschlussbereich (30.3) und/oder im Endbereich (30.1) des Leitelements (30) angeordnet sind.

8. Kombination (30) nach Anspruch 6 oder 7,
**dadurch gekennzeichnet,**
**dass** jeweils zwei Stege (33, 34, 36, 37) gegenüberliegend auf beiden Seiten des Trägers angeordnet sind und/oder dass die Stege (33, 34, 36, 37) an ihren zum Träger hin ausgerichteten Seiten Formschrägen (33.3, 34.3, 36.3, 37.3) derart aufweisen, dass sich ihr gegenseitiger Abstand mit steigendem Abstand zur Rückseite (32.2) des Leitelements (30) vergrößert.

9. Kombination (30) nach einem der Ansprüche 6 bis 8,
**dadurch gekennzeichnet,**
**dass** zwischen den Stegen (33, 34, 36, 37) eine Anlagefläche (32.3) zur Anlage des Leitelements (30) an dem Träger ausgebildet ist und/oder dass im Übergang von den Formschrägen (33.3, 34.3, 36.3, 37.3) zu der Anlagefläche (32.3) Freimachungen (35.1, 35.2, 35.3, 35.4) in Form von Nuten vorgesehen sind.

10. Kombination (30) nach einem der Ansprüche 6 bis 9,
**dadurch gekennzeichnet,**
**dass** die Stege (33, 34, 36, 37) auf ihren dem Leitelement (30) abgewandten Seiten Stegaußenflächen (33.1, 34.1, 36.1, 37.1) aufweisen und dass die Übergänge von den Formschrägen (33.3, 34.3, 36.3, 37.3) zu den Stegaußenflächen (33.1, 34.1, 36.1, 37.1) abgerundet sind.

11. Kombination (30) nach einem der Ansprüche 1 bis 10,
**dadurch gekennzeichnet,**
**dass** das Leitelement (30) am Anschlussbereich (30.3) einen Ansatz, insbesondere einen Steckansatz (70, 90, 110), zur Festlegung in einer Aufnahme (80, 100, 120) der Scharspitze (40) aufweist.

12. Kombination (30) nach Anspruch 11,
**dadurch gekennzeichnet,**
**dass** die Form des Ansatzes des Leitelements (30) derart ausgeführt ist, dass es nur mit einer in ihrer Form angepassten Aufnahme (80, 100, 120) einer dem Leitelement (30) eindeutig zugeordneten Scharspitze (40) verbindbar ist.

13. Kombination (30) nach Anspruch 11 oder 12,
**dadurch gekennzeichnet,**
**dass** der Ansatz des Leitelements (30) mit zumindest einem Vorsprung und/oder zumindest einer Ausnehmung (73) zum Zusammenwirken mit einer Aufnahme (80, 100, 120) und/oder einem angeformten Ansatz (82) der Scharspitze (40) ausgestattet ist.

14. Kombination (30) nach einem der Ansprüche 11 bis 13,
**dadurch gekennzeichnet,**
**dass** der Ansatz und die Aufnahme (80, 100, 120) eine Formschlussverbindung ausbilden.

15. Kombination (30) nach einem der Ansprüche 1 bis 14,
**dadurch gekennzeichnet,**
**dass** die die Leitfläche bildende Vorderseite (32.1) des Leitelements (30) sich im Bereich zwischen dem der Scharspitze (40) zugewandten Ende zu dem der Scharspitze (40) abgewandten Ende wendelt.

16. Werkzeugkombination mit einem Leitelement (30) und einer Scharspitze (40) für eine landwirtschaftliche Bodenbearbeitungsmaschine mit einem Anschlussbereich (30.3) des Leitelements (30) zur Zuordnung des Leitelements (30) an die Scharspitze (40) und mit einer ersten Schraubverbindung (11.1) zur Befestigung des Leitelements (30) an einem Träger, insbesondere einem Zinken (20) der landwirtschaftlichen Bodenbearbeitungsmaschine, wobei eine Dicke (38.1, 38.2) des Leitelements (30) im Anschlussbereich (30.3) innerhalb vorgegebener Toleranzen einer Dicke der Scharspitze (40) an ihrem dem Leitelement (30) zugewandten Ende entspricht,
**dadurch gekennzeichnet,**
**dass** das Leitelement (30) zumindest bereichsweise entlang seiner von dem Anschlussbereich (30.3) zu einem abgewandten Endbereich (30.1) verlaufenden Längserstreckung eine variierende Dicke (38.1, 38.2) aufweist, und dass die Dicke (38.1, 38.2) des Leitelements (30) ausgehend von dem Anschlussbereich (30.3) hin zu einem dem Anschlussbereich (30.3) gegenüberliegenden Endbereich (30.1) des Leitelements (30) abnimmt.

17. Werkzeugkombination nach Anspruch 16,
**dadurch gekennzeichnet,**
**dass** die Scharspitze (40) eine Aufnahme (80, 100, 120) aufweist, die in Werkzeugvorschubrichtung (V) mittels eines Deckabschnitts (61) überdeckt ist, dass das Leitelement (30) einen Ansatz, insbesondere einen Steckansatz (70, 90, 110), aufweist, der in der Aufnahme (80, 100, 120) gehalten ist und dass im Bereich der Aufnahme (80, 100, 120) zwischen der Scharspitze (40) und dem Leitelement (30) eine von einer Aufnahme (80, 100, 120) und dem darin eingreifenden Ansatz gebildete Verbindung, insbesondere eine Formschlussverbindung, wirksam ist.

18. Werkzeugkombination nach Anspruch 17,
**dadurch gekennzeichnet,**
**dass** die Form des Ansatzes, insbesondere des Steckansatzes (70, 90, 110), in Abhängigkeit von der Dicke (38.1, 38.2) des Leitelements (30) in seinem Anschlussbereich (30.3) und die Form der Aufnahme (80, 100, 120) der Scharspitze (40) in Abhängigkeit von der Dicke der Scharspitze (40) an ihrem dem Leitelement (30) zugewandten Ende derart gewählt sind, dass der Ansatz, insbesondere der Steckansatz (70, 90, 110), und die Aufnahme (80, 100, 120) nur bei gleicher Dicke (38.1, 38.2) des Leitelements (30) in seinem Anschlussbereich (30.3) und der Scharspitze (40) an ihrem dem Leitelement (30) zugewandten Ende verbindbar sind.

19. Werkzeugkombination nach einem der Ansprüche 16 bis 18,
**dadurch gekennzeichnet,**
**dass** das Leitelement (30) entlang seiner Längserstreckung zumindest in seinem Anschlussbereich in eine Werkzeugvorschubrichtung (V) konkav geformt ist, dass die Scharspitze (40) entlang ihrer Längserstreckung zumindest in einem dem Leitelement (30) zugewandten Abschnitt in Werkzeugvorschubrichtung (V) konkav geformt ist und dass die Radien der konkav geformten Abschnitte zumindest im Anschlussbereich des Leitelements (30) und in dem dem Leitelement (30) zugewandten Abschnitt der Scharspitze (40) innerhalb herstellungsbedingter Toleranzen gleich sind und/oder dass die konkaven Abschnitte ineinander übergeleitet sind.

## Claims

1. A combination having a guide element (30) and a coulter tip (40) for an agricultural soil working machine with a connection region (30.3) for assigning the guide element (30) to the coulter tip (40) and having a first screw connection (11.1) for fastening the guide element (30) to a support, in particular a tine (20) of the agricultural soil working machine,
**characterised in that**
the guide element (30) has its greatest thickness (38.2) in the connection region (30.3) facing the coulter tip (40),
the guide element (30) has a varying thickness (38.1, 38.2) at least in regions along its longitudinal extension running from the connection region (30.3) to an end region (30.1) facing away from the same.

2. The combination (30) according to claim 1,
**characterised in that**
the guide element (30) has its smallest thickness (38.1) in the end region (30.1) facing away from the coulter tip (40).

3. The combination (30) according to one of claims 1 or 2,
**characterised in that**
the thickness (38.1, 38.2) of the guide element (30) decreases continuously, starting from the connection region (30.3) to the end region (30.1).

4. The combination (30) according to one of claims 1 to 3,
**characterised in that**
the thickness (38.1, 38.2) of the guide element (30) in its connection region (30.3) corresponds within predetermined tolerances to the thickness of the coulter tip (40) associated with the guide element (30) at its end facing the guide element (30).

5. The combination (30) according to one of claims 1 to 4,
**characterised in that**
the first screw connection (11.1) is arranged in the connection region (30.3) of the guide element (30) and/or **in that** a first screw head (12.1) of a first fastening screw (12) of the first screw connection (11.1) is arranged in a first screw receptacle (31), recessed relative to a discharge surface (32.1) of the guide element (30).

6. The combination (30) according to one of claims 1 to 5,
**characterised in that**
the guide element (30) can be applied with its rear side (32.2) on the support and/or **in that** the guide element (30) has on its rear side (32.2) webs (33, 34, 36, 37) that are arranged at a distance from one another and/or **in that** a guide receptacle for the support is formed between the webs (33, 34, 36, 37).

7. The combination (30) according to claim 6,
**characterised in that**
the webs (33, 34, 36, 37) are arranged in the connection region (30.3) and/or in the end region (30.1) of the guide element (30).

8. The combination (30) according to claim 6 or 7,
**characterised in that**
in each case two webs (33, 34, 36, 37) are arranged opposite one another on both sides of the support and/or **in that** the webs (33, 34, 36, 37) have tapers (33.3, 34.3, 36.3, 37.3) on their sides which are oriented towards the carrier such that their mutual distance increases with an increasing distance to the rear side (32.2) of the guide element (30).

9. The combination (30) according to one of claims 6 to 8,
**characterised in that**
a contact surface (32.3) is formed between the webs (33, 34, 36, 37) for abutment of the guide element (30) on the support and/or **in that** in the transition from the tapers (33.3, 34.3, 36.3, 37.3) to the contact surface (32.3) free areas (35.1, 35.2, 35.3, 35.4) are provided in the form of grooves.

10. The combination (30) according to one of claims 6 to 9,
**characterised in that**
the webs (33, 34, 36, 37) have web outer surfaces (33.1, 34.1, 36.1, 37.1) on their sides facing away from the guide element (30) and **in that** the transitions from the tapers (33.3, 34.3, 36.3, 37.3) to the web outer surfaces (33.1, 34.1, 36.1, 37.1) are rounded.

11. The combination (30) according to one of claims 1 to 10,
**characterised in that**
the guide element (30) has a projection, in particular a plug-in extension (70, 90, 110) on the connection region (30.3), for fixing into a receptacle (80, 100, 120) of the coulter tip (40).

12. The combination (30) according to claim 11,
**characterised in that**
the shape of the projection of the guide element (30) is designed such that it can only be connected with a receptacle (80, 100, 120), adapted in shape, of a coulter tip (40) uniquely associated with the guide element (30).

13. The combination (30) according to claim 11 or 12,
**characterised in that**
the projection of the guide element (30) is equipped with at least one projection and/or at least one recess (73) for cooperation with a receptacle (80, 100, 120) and/or an integrally formed projection (82) of the coulter tip (40).

14. The combination (30) according to one of claims 11 to 13,
**characterised in that**
the projection and the receptacle (80, 100, 120) form a form-locking connection.

15. The combination (30) according to one of claims 1 to 14,
**characterised in that**
the front surface (32.1) of the guide element (30) forming the guide surface turns in the region between the end facing the coulter tip (40) and the end facing away from the coulter tip (40).

16. A tool combination having a guide element (30) and a coulter tip (40) for an agricultural soil working machine with a connection region (30.3) of the guide element (30) for assigning the guide element (30) to the coulter tip (40) and having a first screw connection (11.1) for fastening the guide element (30) to a support, in particular a tine (20) of the agricultural soil working machine, wherein a thickness (38.1, 38.2) of the guide element (30) in its connection region (30.3) corresponds within predetermined tolerances to the thickness of the coulter tip (40) at its end facing the guide element (30), **characterised in that**
the guide element (30) has a varying thickness (38.1, 38.2) at least in regions along its longitudinal extension running from the connection region (30.3) to an end region (30.1) facing away from the same, and **in that** the thickness (38.1, 38.2) of the guide element (30) decreases, starting from the connection region (30.3) to an end region (30.1) of the guide element (30) positioned opposite the connection region (30.3).

17. The tool combination according to claim 16,
**characterised in that**
the coulter tip (40) has a receptacle (80, 100, 120) which is covered in the tool feed direction (V) by means of a cover section (61), **in that** the guide element (30) has a projection, in particular a plug-in extension (70, 90, 110), which is held in the receptacle (80, 100, 120) and **in that** in the region of the receptacle (80, 100, 120) between the coulter tip (40) and the guide element (30) a connection, in particular a form-fitting connection, formed by a receptacle (80, 100, 120) and the projection engaging therein, is effective.

18. The tool combination according to claim 17,
**characterised in that**
the shape of the projection, in particular of the plug-in extension (70, 90, 110), depending on the thickness (38.1, 38.2) of the guide element (30) in its connection region (30.3) and the shape of the receptacle (80, 100, 120) of the coulter tip (40) depending on the thickness of the coulter tip (40) at its end facing the guide element (30) are selected such that the projection, in particular the plug-in extension (70, 90, 110), and the receptacle (80, 100, 120) can be connected only with the same thickness (38.1, 38.2) of the guide element (30) in its connection region (30.3) and the coulter tip (40) at its end facing the guide element (30).

19. The tool combination according to one of claims 16 to 18,
**characterised in that**
the guide element (30) is concave in a tool feed direction (V) along its longitudinal extension at least in its connection region, **in that** the coulter tip (40) is concave in a tool feed direction (V) along its longitudinal extension at least in a section facing the guide element (30) and **in that** the radii of the concave sections are the same within production-related tolerances at least in the connection region of the guide element (30) and in the section of the coulter tip (40) facing the guide element (30) and/or **in that** the concave sections are merged into one another.

## Revendications

1. Combinaison comprenant un élément de guidage (30) et une pointe de soc (40) pour une machine de préparation du sol agricole ayant une région d'assemblage (30.3) permettant d'affecter l'élément de guidage (30) à la pointe de soc (40) et ayant un premier raccord à vis (11.1) pour la fixation de l'élément de guidage (30) sur un support, notamment une dent (20) de la machine de préparation du sol agricole,
**caractérisée en ce que**
l'élément de guidage (30) a sa plus grande épaisseur (38.2) dans la région d'assemblage (30.3) en regard de la pointe de soc (40),
l'élément de guidage (30) a une épaisseur variable (38.1, 38.2) au moins dans des régions le long de sa direction longitudinale allant de la région d'assemblage (30.3) à une région d'extrémité (30.1) qui lui est opposée.

2. Combinaison (30) selon la revendication 1,
**caractérisée en ce que**
l'élément de guidage (30) a sa plus faible épaisseur (38.1) dans la région d'extrémité (30.1) opposée à la pointe de soc (40),

3. Combinaison (30) selon une des revendications 1 ou 2,
**caractérisée en ce que**
l'épaisseur (38.1, 38.2) de l'élément de guidage (30), à partir de la région d'assemblage (30.3) jusqu'à la région d'extrémité (30.1), diminue de manière continue.

4. Combinaison (30) selon une des revendications 1 à 3,
**caractérisée en ce que**
l'épaisseur (38.1, 38.2) de l'élément de guidage (30) dans sa région d'assemblage (30.3) correspond, dans des tolérances prédéfinies de l'épaisseur de la pointe de soc (40) associée à l'élément de guidage (30), à celle de l'extrémité tournée vers l'élément de guidage (30).

5. Combinaison (30) selon une des revendications 1 à 4,
**caractérisée en ce que**
le premier raccord à vis (11.1) est disposé dans la région d'assemblage (30.3) de l'élément de guidage (30) et/ou qu'une première tête de vis (12.1) d'une première vis de fixation (12) du premier raccord à vis (11.1) est insérée dans une première réception de vis (31) en retrait par rapport à une surface de déviation (32.1) de l'élément de guidage (30).

6. Combinaison (30) selon une des revendications 1 à 5,
**caractérisée en ce que**
l'élément de guidage (30) peut être appliqué sur le support par son côté arrière (32.2) et/ou **en ce que** l'élément de guidage (30) présente des entretoises (33, 34, 36, 37) agencés à distance l'une de l'autre sur son côté arrière (32.2) et/ou qu'entre les entretoises (33, 34, 36, 37) est formé un logement de guidage pour le support.

7. Combinaison (30) selon la revendication 6,
**caractérisée en ce que**
les entretoises (33, 34, 36, 37) sont disposées dans la région d'assemblage (30.3) et/ou dans la région d'extrémité (30.1) de l'élément de guidage (30).

8. Combinaison (30) selon la revendication 6 ou 7,
**caractérisée en ce que**
dans chaque cas, deux entretoises (33, 34, 36, 37) sont agencées en regard des deux côtés du support et/ou que les entretoises (33, 34, 36, 37) présentent des dépouilles (33.3, 34.3, 36.3, 37.3) sur leur côté orienté vers le support de sorte que leur distance mutuelle augmente à mesure que la distance au côté arrière (32.2) de l'élément de guidage (30) augmente.

9. Combinaison (30) selon une des revendications 6 à 8,
**caractérisée en ce que**
une surface de contact (32.3) est formée entre les entretoises (33, 34, 36, 37) pour que l'élément de guidage (30) vienne en contact avec le support et/ou **en ce que** dans la transition entre les dépouilles (33.3, 34.3, 36.3, 37.3) et la surface d'appui (32.3) sont ménagés des évidements (35.1, 35.2, 35.3, 35.4) sous forme de rainures.

10. Combinaison (30) selon une des revendications 6 à 9,
**caractérisée en ce que**
les entretoises (33, 34, 36, 37) ont des surfaces extérieures (33.1, 34.1, 36.1, 37.1) sur leurs côtés opposés à l'élément de guidage (30) et **en ce que** les transitions entre les dépouilles (33.3, 34.3, 36.3, 37.3) et les surfaces extérieures (33.1, 34.1, 36.1, 37.1) sont arrondies.

11. Combinaison (30) selon une des revendications 1 à 10,
**caractérisée en ce que**
l'élément de guidage (30) présente un appendice, en particulier un appendice d'emboîtement (70, 90, 110) sur la région d'assemblage (30.3), pour bloquer la point de soc (40) dans un logement (80, 100, 120).

12. Combinaison (30) selon la revendication 11,
**caractérisée en ce que**
la forme de l'appendice de l'élément de guidage (30) est conçue de telle sorte qu'elle ne peut être reliée qu'à un logement (80, 100, 120) adapté à sa forme, d'une pointe de soc (40) associée explicitement à l'élément de guidage (30).

13. Combinaison (30) selon la revendication 11 ou 12,
**caractérisée en ce que**
l'appendice de l'élément de guidage (30) est équipée d'au moins une saillie et/ou d'au moins un évidement (73) destiné à coopérer avec un logement (80, 100, 120) et/ou un appendice moulé (82) de la pointe de la soc (40).

14. Combinaison (30) selon une des revendications 11 à 13,
**caractérisée en ce que**
l'appendice et le logement (80, 100, 120) forment une liaison par coopération de formes.

15. Combinaison (30) selon une des revendications 1 à 14,
**caractérisée en ce que**
la face avant (32.1) de l'élément de guidage (30) formant la surface de guidage s'enroule dans la région située entre l'extrémité faisant face à la pointe de soc (40) et l'extrémité opposée à la pointe de soc (40).

16. Combinaison d'outils comprenant un élément de guidage (30) et une pointe de soc (40) pour une machine de préparation du sol agricole ayant une région de connexion (30.3) de l'élément de guidage (30) pour l'affectation de l'élément de guidage (30) à la pointe de soc (40) et ayant un premier raccord à vis (11.1) pour la fixation de l'élément de guidage (30) sur un support, en particulier une dent (20) de la machine de préparation du sol agricole, une épaisseur (38.1, 38.2) de l'élément de guidage (30) dans la région d'assemblage (30.3) correspondant dans des tolérances prédéfinies d'une épaisseur de la pointe du soc (40) à son extrémité faisant face à l'élément de guidage (30),
**caractérisée en ce que**
l'élément de guidage (30) a une épaisseur variable (38.1, 38.2) au moins dans des régions le long de sa direction longitudinale partant de la région d'assemblage (30.3) à une région d'extrémité (30.1) opposée, et **en ce que** l'épaisseur (38.1, 38.2) de l'élément de guidage (30) diminue à partir de la région d'assemblage (30.3) jusqu'à une région terminale (30.1) opposée à la région d'assemblage (30.3) de l'élément de guidage (30).

17. Combinaison d'outil selon la revendication 16,
**caractérisée en ce que**
la pointe de soc (40) présente un logement (80, 100, 120) recouvert dans le sens d'avancement de l'outil (V) au moyen d'une section de recouvrement (61), **en ce que** l'élément de guidage (30) comporte un appendice, en particulier un appendice d'emboîtement (70, 90, 110), qui est maintenu dans le logement (80, 100, 120) et **en ce que** dans la région du logement (80, 100, 120) entre la pointe du soc (40) et l'élément de guidage (30), opère une liaison formée d'un logement (80, 100, 120) et de l'appendice qui s'y insère, en particulier une liaison par coopération de formes.

18. Combinaison d'outil selon la revendication 17,
**caractérisée en ce que**
la forme de l'appendice, en particulier de l'appendice d'emboîtage (70, 90, 110), est choisie en fonction de l'épaisseur (38.1, 38.2) de l'élément de guidage (30) dans sa région d'assemblage (30.3) et la forme du logement (80, 100, 120) de la pointe de soc (40) est choisie en fonction de l'épaisseur de la pointe de soc (40) au niveau de son extrémité faisant face à l'élément de guidage (30) de telle sorte que l'appendice, en particulier de l'appendice d'emboîtage (70, 90, 110), et le logement (80, 100, 120) ne puissent être assemblés qu'à une même épaisseur (38.1, 38.2) de l'élément de guidage (30) dans sa région d'assemblage (30.3) et de la pointe de soc (40) au niveau de son extrémité faisant face à l'élément de guidage (30).

19. Combinaison d'outil selon l'une des revendications 16 à 18,
**caractérisée en ce que**
l'élément de guidage (30) est concave le long de sa direction longitudinale dans le sens d'avancement de l'outil (V) au moins dans sa région d'assemblage, **en ce que** la pointe de soc (40) est concave dans sa direction longitudinale au moins dans une section du sens d'avancement de l'outil (V) faisant face à l'élément de guidage (30) et **en ce que** les rayons des sections concaves sont les mêmes dans les tolérances liées à la production, au moins dans la région de connexion de l'élément de guidage (30) et dans la section de la pointe de soc (40) faisant face à l'élément de guidage (30) et/ou que les sections concaves sont confondues.
